# EUROPÄISCHE PATENTSCHRIFT

(11) **EP 3 342 135 B1**
(45) Veröffentlichungstag und Bekanntmachung des Hinweises auf die Patenterteilung: **17.06.2020**
(21) Anmeldenummer: 16748089.6
(22) Anmeldetag: 28.07.2016
(51) Int. Cl.: H04L 29/08, G06Q 20/22, G06Q 50/06

(54) **VERSORGUNGSSYSTEM UND VERFAHREN ZUM BETREIBEN EINES VERSORGUNGSSYSTEMS**
UTILITY SYSTEM AND METHOD FOR OPERATING A UTILITY SYSTEM
SYSTÈME D'APPROVISONNEMENT ET PROCÉDÉ POUR FAIRE FONCTIONNER UN SYSTÈME D'APPROVISONNEMENT

(30) Priorität: 27.08.2015 DE 102015114215
(43) Veröffentlichungstag der Anmeldung: 04.07.2018
(73) Patentinhaber: INNOGY INNOVATION GMBH, 45139 Essen (DE)
(72) Erfinder: STÖCKER, Carsten, 40724 Hilden (DE); WAFFNER, Jürgen, 45307 Essen (DE)
(74) Vertreter: Cohausz & Florack
(86) Internationale Anmeldenummer: PCT/EP2016/067991
(87) Internationale Veröffentlichungsnummer: WO 2017/032541

(56) Entgegenhaltungen:
- WO-A1-2016/151316
- ALAM M T ET AL: "Bitcoin for smart trading in smart grid", THE 21ST IEEE INTERNATIONAL WORKSHOP ON LOCAL AND METROPOLITAN AREA NETWORKS, IEEE, 22. April 2015 (2015-04-22), Seiten 1-2, XP032781684, DOI: 10.1109/LANMAN.2015.7114742 [gefunden am 2015-05-28]
- Melanie Swan: "Blockchain: Blueprint for a New Economy" In: "Blockchain: Blueprint for a New Economy", 8. Februar 2015 (2015-02-08), O'Reilly, XP055279098, ISBN: 978-1-4919-2049-7 Seiten 9-26
- Dr Gavin Wood: "ETHEREUM: A SECURE DECENTRALISED GENERALISED TRANSACTION LEDGER FINAL DRAFT -UNDER REVIEW", , 4. Juni 2014 (2014-06-04), XP055242189, Gefunden im Internet: URL:http://gavwood.com/paper.pdf [gefunden am 2016-01-18]
- "Mastering bitcoin , Chapter 1: Introduction", 6. März 2015 (2015-03-06), MASTERING BITCOIN : [UNLOCKING DIGITAL CRYPTOCURRENCIES], O'REILLY MEDIA, BEIJING CAMBRIDGE FARNHAM KÖLN SEBASTOPOL TOKYO, PAGE(S) 1 - 4, XP002759267, ISBN: 978-1-4493-7404-4 das ganze Dokument

## Beschreibung

Die Erfindung betrifft ein Versorgungssystem gemäß Anspruch 1 und ein entsprechendes Verfahren gemäß Anspruch 8. Darüber hinaus betrifft die Erfindung eine Kommunikationsvorrichtung gemäß Anspruch 9 und ein entsprechendes Verfahren gemäß Anspruch 10 sowie eine Peer-zu-Peer-Anwendung gemäß Anspruch 11 und ein entsprechendes Verfahren gemäß Anspruch 12.

Aus dem Stand der Technik sind Systeme zur Versorgung von Entitäten mit einem Versorgungsmedium bekannt. Beispielhafte und nicht abschließende Versorgungssysteme sind elektrische Versorgungsnetze, Gasversorgungsnetze, Wasserversorgungsnetze oder Fernwärmenetze. Beispielsweise offenbart der Artikel "Bitcoin for Smart Trading in Smart Grid" von M. T. Alan et al., 21ST IEEE INTERNATIONAL WORKSHOP ON LOCAL AND METROPOLITAN AREA NETWORKS, 22.04.2015, ein bekanntes Versorgungssystem.

Sämtliche Versorgungssysteme zeichnen sich in der vorliegenden Anmeldung dadurch aus, dass in einem Versorgungssystem mindestens ein Versorgungsmedium über mindestens ein physikalisches, insbesondere leitungsgebundenes Versorgungskanalnetz übertragen wird. Beispielhafte und nicht abschließende Versorgungsmedien sind elektrischer Strom bzw. elektrische Leistung, Wasser, wie Frisch-, Abwasser oder Wasser für Bewässerung, gasförmige Medien, wie Erdgas oder ein ähnliches (brennbares) Gas, Wärme, beispielsweise in Form warmer Luft, und Kälte, beispielsweise in Form kalter Luft.

Ein physikalisches Versorgungskanalnetz kann mindestens einen physikalischen leitungsgebundenen Versorgungskanal umfassen. Das mindestens eine physikalische Versorgungskanalnetz kann im Falle eines elektrischen Versorgungssystems eine elektrische Leitung, vorzugweise eine Vielzahl von elektrischen Energieleitungen, wie ein Stromnetz, sein. Ferner kann bei anderen Versorgungssystemen, wie Gas-, Wärme-, oder Wasserversorgungssystemen, das physikalische, insbesondere leitungsgebundene Versorgungskanalnetz mindestens eine Fluidleitung, z.B. in Form einer Rohrleitung, insbesondere einem Rohrleitungsnetz, gebildet sein.

Bei einem Versorgungskanalnetz kann es sich zumindest teilweise um ein öffentliches Versorgungskanalnetz und/oder zumindest teilweise um ein privates Versorgungskanalnetz, wie ein separates Inselnetz, handeln.

Das mindestens eine physikalische Versorgungskanalnetz eines Versorgungssystems kann insbesondere zumindest zwei Entitäten miteinander verbinden. Bei einem beispielhaften elektrischen Versorgungssystem kann mindestens eine erste Entität umfassend mindestens einen elektrischen Verbraucher mit einer weiteren Entität umfassend mindestens einen elektrischen Erzeuger verbunden sein. Der Verbraucher kann über einen physikalischen Kanal des Versorgungskanalnetzes mit elektrischer Leistung durch den Erzeuger versorgt werden.

Allen Versorgungssystemen des Standes der Technik ist gemein, dass ferner ein zentrales Subsystem, ein zentraler Prozess und/oder eine zentrale Organisation bzw. Instanz vorgesehen ist, um sowohl eine Versorgungsmedium-Transkations-Vereinbarung mit der ersten Entität als auch mit der weiteren Entität zu generieren. Mit anderen Worten wird der Ein- und Verkauf eines Versorgungsmediums zentral durch eine zentrale Instanz gesteuert. Der Handel des Versorgungsmediums erfolgt ausschließlich über diese oder ggf. eine weitere zentrale Instanz.

Technisch wird ein entsprechendes Versorgungssystem nach dem Stand der Technik durch eine Client-Server-Struktur realisiert. Die zentrale Organisation bzw. Instanz wird durch einen oder mehrere zentrale Server gebildet. Ein derartiger Server bzw. eine Plattform kann verteilt sein und zum Beispiel auf verschiedenen Recheneinrichtungen verteilt angeordnet sein. So kann ein virtueller Server durch eine Cloud realisiert sein. Beispielsweise kann eine zentral angeordnete Datenbank vorgesehen sein. Beispiele aus dem Stand der Technik von derartigen Datenbanken, die häufig auch Plattform genannt werden, sind Marktplatzdatenbanken (marketplace database oder cloud platform), Liefererfüllungsdatenbanken (delivery fulfilment database oder cloud service) oder Abrechnungssystemdatenbanken (billing systems oder cloud service). Insbesondere kann eine zentrale Instanz eingerichtet sein, das Versorgungsmedium zu bestellen bzw. es zu handeln, den Abrechnungsprozess durchzuführen, die Zahlung zu überwachen und/oder das Portfoliomanagement durchzuführen. Insbesondere dient der zentrale Server bei einer Versorgungmedium-Transaktions-Vereinbarung als vertrauenswürdige Instanz für die zumindest zwei Entitäten. Die zentrale Instanz, wie ein Server oder eine Plattform, definiert die Regeln. Indem diese Versorgungmedium-Transaktions-Vereinbarungen von dem zentralen Server durchgeführt werden, wird sichergestellt, dass die Prozesse für alle beteiligten Entitäten (Verbraucher, Erzeuger, etc.) korrekt durchgeführt werden. Mit anderen Worten wird durch eine zentrale Instanz einer Manipulation durch eine der beteiligten Entitäten und/oder durch Dritte vorgebeugt.

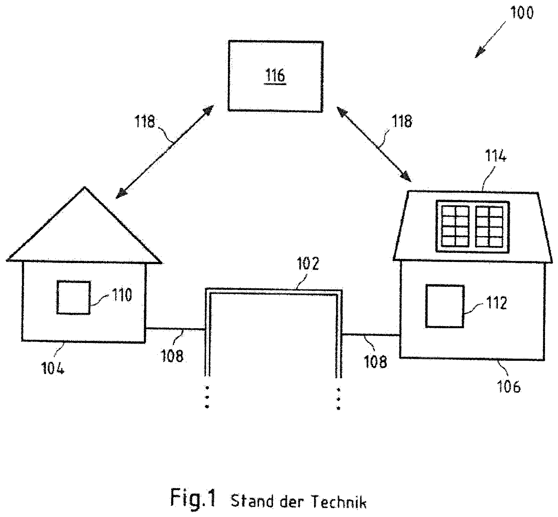

Am Beispiel eines elektrischen Versorgungsnetzes wird nachfolgend ein typisches Stand der Technik Versorgungssystem 100 mittels der Figur 1 beschrieben. Die Figur 1 zeigt ein Ausführungsbeispiel eines Versorgungssystems 100 des Standes der Technik. Das dargestellte Versorgungssystem 100 umfasst mindestens ein physikalisches Versorgungskanalnetz 102. Bei dem physikalischen Versorgungskanalnetz 102 handelt es sich beispielsweise um eine oder mehrere elektrische Leitungen, wie Erdleitungen und/oder Überlandleitungen. Ferner kann ein physikalisches Versorgungskanalnetz 102 (nicht gezeigte) Transformatoreinrichtungen und dergleichen umfassen.

Mit dem physikalischen Versorgungskanalnetz 102 sind über elektrische Anschlüsse 108 eine erste Entität 104 und eine weitere Entität 106 verbunden. Ein Anschluss 108 kann zum bidirektionalen Austausch von Strom bzw. Leistung eingerichtet sein. Beispielsweise kann die erste Entität 104 ein Haushalt 104 sein, der einen oder mehrere elektrische Verbraucher 110 umfasst. Daher kann die erste Entität 104 auch als Verbraucher 104 bzw. Consumer 104 bezeichnet werden. Über den entsprechenden Anschluss 108 kann der Consumer 104 Leistung aus dem Versorgungssystem 100, insbesondere von dem physikalischen Versorgungskanalnetz 102, beziehen.

Die weitere Entität 106, beispielsweise ein Haushalt 106, kann neben mindestens einem Verbraucher 112 einen Erzeuger 114 beispielsweise in Form einer Photovoltaikanlage 114 aufweisen. Die weitere Entität 106 ist daher Erzeuger und Verbraucher. Eine derartige Entität 106 kann als Prosumer (Produzent und Consumer) 106 bezeichnet werden. Über den entsprechenden Anschluss 108 kann der Prosumer 106 Leistung aus dem Versorgungssystem 100, insbesondere von dem physikalischen Versorgungskanalnetz 102, beziehen oder in das Versorgungssystem 100, insbesondere in das physikalische Versorgungskanalnetz 102, einspeisen.

Ferner ist ein zentraler Server, insbesondere ein zentraler Verwaltungsserver 116, vorgesehen. Der zentrale Verwaltungsserver 116 ist eingerichtet, das Versorgungssystem 100 zu verwalten. Über Kommunikationsverbindungen 118, beispielsweise Internetverbindungen oder durch manuelles Ablesen von Daten, kann der Server 116 mit den mindestens zwei Entitäten 104, 106 kommunizieren. Insbesondere kann jede Entität 104, 106 eine (nicht dargestellte) Clientvorrichtung aufweisen.

So kann der zentrale Verwaltungsserver 116 basierend auf einer Anfragenachricht der Clientvorrichtung der ersten Entität 104 eine Versorgungmedium-Transaktions-Vereinbarung zwischen dem Verwaltungsserver 116 und der ersten Entität 104 über den Austausch, insbesondere der Lieferung, einer Versorgungsmediummenge für einen zukünftigen Zeitraum generieren. Darüber hinaus kann in entsprechender Weise eine Versorgungmedium-Transaktions-Vereinbarung zwischen dem Verwaltungsserver 116 und der weiteren Entität 106 über den Austausch, beispielsweise der Abnahme von Versorgungsmedium, generiert werden. Das Versorgungsmedium kann dann von der weiteren Entität über das physikalische Versorgungskanalnetz 102 an die erste Entität 104 übertragen werden. Indirekt ist hierdurch eine Versorgungmedium-Transaktions-Vereinbarung zwischen den Entitäten 104, 106 generiert worden. Alternativ kann mittels des zentralen Servers 116 eine Versorgungmedium-Transaktions-Vereinbarung zwischen den Entitäten 104, 106 generiert werden. Auch die anschließende Abrechnung basierend auf der tatsächlich ausgetauschten Versorgungsmediummenge kann von der zentralen Instanz 116 durchgeführt werden. Beispielsweise können die Zähler der jeweiligen Entität 104, 106 von dem Server 116 ausgelesen, ausgewertet und dann entsprechend der Auswertung abgerechnet werden.

Nachteilig an derartigen Server-Client-Strukturen, insbesondere dem Server (oder Plattform), ist neben den hohen Transaktionskosten, dass die zentrale Instanz bzw. der zentrale Server Kundendaten verwaltet. Ein ständiges Problem der zentralen Instanz ist, die auf einem oder mehreren Server/n gespeicherten Kundendaten vor einem Zugriff eines unberechtigten Dritten zu schützen. Insbesondere ist ein großer sicherheitstechnischer Aufwand erforderlich, um eine Manipulation beispielsweise der Kundendaten, Abrechnungsdaten, Prognosedaten, etc. zu verhindern. Dies führt wiederum zu höheren Transaktionskosten.

Daher liegt der Erfindung die Aufgabe zugrunde, ein System, eine Kommunikationsvorrichtung und ein Verfahren zum Betreiben eines Versorgungssystems bereitzustellen, welche/s die Generierung von einer Versorgungmedium-Transaktions-Vereinbarung vereinfacht und gleichzeitig eine hohe Sicherheit bietet.

Die Aufgabe wird gemäß einem ersten Aspekt der Erfindung bei einem System, insbesondere einem Versorgungssystem, gemäß dem Patentanspruch 1 gelöst. Das System umfasst eine erste mit mindestens einem physikalischen Versorgungskanalnetz verbindbare Entität. Das System umfasst mindestens eine weitere mit dem physikalischen Versorgungskanalnetz verbindbare Entität. Das System umfasst mindestens ein Peer-to-Peer-Netzwerk eingerichtet zum Bereitstellen einer Peer-to-Peer-Anwendung. Die erste Entität umfasst mindestens eine mit dem Peer-to-Peer-Netzwerk verbindbare Kommunikationsvorrichtung. Die weitere Entität umfasst mindestens eine weitere mit dem Peer-to-Peer-Netzwerk verbindbare Kommunikationsvorrichtung. Mindestens eine der Kommunikationsvorrichtungen ist eingerichtet, zumindest eine Generierung einer Versorgungsmedium-Transaktions-Vereinbarung über den physikalischen Austausch eines Versorgungsmediums zwischen der ersten Entität und der weiteren Entität mittels der Peer-to-Peer-Anwendung zu bewirken.

Im Gegensatz zum Stand der Technik wird erfindungsgemäß in einfacher Weise eine Versorgungsmedium-Transaktions-Vereinbarung zwischen zwei Entitäten ohne zentrale Instanz generiert, indem anstelle eines zentralen Servers oder einer Plattform ein Peer-to-Peer-Netzwerk (also ein Framework) die manipulationssichere Generierung einer Versorgungsmedium-Transaktions-Vereinbarung mittels einer Peer-to-Peer-Anwendung übernimmt. Bei einem Peer-to-Peer-Netzwerk werden hohe Sicherheitsstandards dadurch erreicht, indem vorzugsweise sämtliche Rechner (Peer-Knoten) des Netzwerks, zumindest eine Teilmenge der Peer-Rechner des Netzwerks, die Korrektheit von Versorgungsmedium-Transaktions-Vereinbarungen überwacht/en. Die Transaktionskosten können signifikant reduziert werden. Es ist keine zentrale, übergeordnete Plattform, Server, Cloud, etc. erforderlich.

Das System gemäß der Erfindung zeichnet sich durch ein Versorgungskanalnetz zum Übertragen von mindestens einem Versorgungsmedium zwischen zumindest zwei mit dem Versorgungskanalnetz verbindbarem Entitäten aus. Beispielhafte und nicht abschließende Systeme, insbesondere Versorgungssysteme, sind elektrische Versorgungsnetze, Gasversorgungsnetze, Wasserversorgungsnetze und Fernwärmenetze.

Als Versorgungsmedium kann entsprechend der Art des Versorgungssystems über ein geeignetes physikalisches, insbesondere leitungsgebundenes, Versorgungskanalnetz elektrischer Strom bzw. elektrische Leistung, Wasser, wie Frisch-, Abwasser oder Wasser für Bewässerung, gasförmige Medien, wie Erdgas oder einem ähnlichen (brennbaren) Gas, Wärme, beispielsweise in Form warmer Luft, und/oder Kälte, beispielsweise in Form kalter Luft übertragen bzw. ausgetauscht werden.

Bei einem Versorgungskanalnetz kann es sich zumindest teilweise um ein öffentliches Versorgungskanalnetz und/oder zumindest teilweise um ein privates Versorgungskanalnetz handeln. Beispielsweise kann das Netz ein separates Microgrid (nur) für die Entitäten des Versorgungsystems oder ein virtuelles Microgrid sein. Vorzugsweise kann es sich um ein öffentliches Netz handeln.

Insbesondere sind zumindest eine erste Entität und eine weitere Entität jeweils über einen geeigneten Anschluss mit dem physikalischen Versorgungskanalnetz zumindest verbindbar. Der Anschluss korrespondiert zu dem physikalischen Versorgungskanalnetz und kann beispielsweise eine elektrische Leitung oder eine Fluidverbindung sein. Es versteht sich, dass ein Versorgungssystem drei oder mehr Entitäten umfassen kann. Unter einem Versorgungsnetz ist vorliegend insbesondere ein Versorgungssystem zu verstehen, bei dem mindestens eine Entität das Versorgungsmedium produzieren und vorzugsweise in eine Leitung des physikalischen Versorgungskanalnetzes einspeisen kann und mindestens eine Entität das Versorgungsmedium aus einer Leitung des physikalischen Versorgungskanalnetzes entnehmen und vorzugsweise verbrauchen kann. Bei solchen Versorgungsnetzen ist es wünschenswert, dass sich Einspeisemenge und Ausspeisungsmenge ausgleichen. Insbesondere zeichnet sich vorliegend ein Versorgungskanalnetz dadurch aus, dass es eine beschränkte Kapazität aufweist.

Eine Entität kann dazu eingerichtet sein, mit mindestens einer weiteren Entität über das physikalische Versorgungskanalnetz ein Versorgungsmedium auszutauschen. Grundsätzlich kann ein Versorgungsystem unterschiedliche Arten von Entitäten umfassen, so lange diese mit dem physikalischen Versorgungskanalnetz verbunden werden können. Eine Entität kann beispielsweise ein Gebäude, ein Teil eines Gebäudes, wie eine Wohnung, ein einzelnes (intelligentes) Gerät bzw. Maschine, ein Unternehmen oder dergleichen sein.

Um den physikalischen Austausch des Versorgungsmediums zu bewirken kann, ohne einen zentralen Server, Plattform, etc., mindestens eine der Entitäten eingerichtet sein, die Generierung einer Versorgungsmedium-Transaktions-Vereinbarung über den physikalischen Austausch eines Versorgungsmediums mittels des Peer-to-Peer-Netzwerks zu bewirken. Hierzu weist vorzugsweise jede Entität mindestens eine Kommunikationsvorrichtung auf. Eine Kommunikationsvorrichtung kann eine Rechenvorrichtung, wie ein Computer, ein Mobilgerät, eine Recheneinrichtung eines anderen Geräts, wie ein Fernseher, eine Fernsehbox, etc., oder zumindest ein Teil von einem dieser Geräte sein. Die Kommunikationsvorrichtung kann ein Hardware und/oder Softwaremodul sein.

Die Kommunikationsvorrichtung ist eingerichtet, mit dem Peer-to-Peer-Netzwerk bzw. dem Rechner-Rechner-Netzwerk zu kommunizieren. Im Vergleich zu einem Client-Server-Netzwerk, bei dem ein Server einen Dienst anbietet und ein Client diesen Dienst nutzt, ist in einem Peer-to-Peer-Netzwerk diese Rollenverteilung aufgehoben. Jeder Teilnehmer des Peer-to-Peer-Netzwerks kann einen Dienst gleichermaßen nutzen und selbst anbieten. Insbesondere ist ein Peer-to-Peer-Netzwerk selbstbestimmt und/oder selbstorganisiert (ohne übergeordnete Einheit). Vorliegend weist vorzugweise jeder Rechner des Peer-to-Peer-Netzwerks eine Peer-to-Peer-Anwendung auf. Die Kommunikationsvorrichtung kann ein Knoten des Peer-to-Peer-Netzwerks sein oder nur ein Schnittstellenmodul zur Kommunikation mit dem Peer-to-Peer-Netzwerk bereitstellen.

Das Peer-to-Peer-Netzwerk ist eingerichtet, mindestens eine Peer-to-Peer-Anwendung konfiguriert zum Generieren von mindestens einer Versorgungsmedium-Transaktions-Vereinbarung bereitzustellen. Die Peer-to-Peer-Anwendung zeichnet sich dadurch aus, dass die Peer-to-Peer-Anwendung bzw. der Dateninhalt der Peer-to-Peer-Anwendung von allen Teilnehmern des Peer-to-Peer-Netzwerks zugänglich ist und insbesondere kontrolliert werden kann. Es versteht sich, dass zwei oder mehr, insbesondere unterschiedliche, Peer-to-Peer-Anwendungen vorgesehen sein können.

Eine Versorgungsmedium-Transaktions-Vereinbarung kann insbesondere Angaben über die zumindest zwei beteiligten Entitäten, beispielsweise eine eindeutige ID und/oder Hash Code, wie eine zumindest allen Teilnehmern des Peer-to-Peer-Netzwerks bekannte Adresse einer Entität, die auszutauschende Menge an einem Versorgungsmedium, den Zeitraum des Austausches und/oder mindestens ein Transaktionskriterium umfassen. Durch geeignete Prüf- und/oder Validierungsalgorithmen, wie digitale Signaturen und/oder Hash-Funktionen, kann die Korrektheit und/oder Unveränderlichkeit einer generierten Versorgungsmedium-Transaktions-Vereinbarung insbesondere durch die kumulierte Rechenleistung der Rechner des Peer-to-Peer-Netzwerks sichergestellt werden.

Mindestens eine der Kommunikationsvorrichtungen, vorzugsweise sämtliche Kommunikationsvorrichtungen, ist/sind dazu eingerichtet, eine Generierung einer Versorgungsmedium-Transaktions-Vereinbarung zwischen zwei Entitäten, beispielsweise durch Senden einer Nachricht umfassend Instruktion zum Generieren der Versorgungsmedium-Transaktions-Vereinbarung, zu bewirken bzw. zu veranlassen. Insbesondere können ein geeigneter Code und ggf. mindestens ein Schlüssel zur Verifizierung des Absenders einer Nachricht und/oder der Echtheit einer Nachricht an die Peer-to-Peer-Anwendung übertragen bzw. in die Peer-to-Peer-Anwendung von der Kommunikationsvorrichtung geschrieben werden. Vorzugsweise nach einer Bestätigungsnachricht von der weiteren Entität umfassend geeignete Instruktion und ggf. mindestens einen Schlüssel zur Verifizierung des Absenders der Bestätigungsnachricht kann nach einer Überprüfung durch das Peer-to-Peer-Netzwerk von der Peer-to-Peer-Anwendung eine entsprechende Versorgungsmedium-Transaktions-Vereinbarung generiert werden. Vereinfacht ausgedrückt kann sich jede Entität mittels des Peer-to-Peer-Netzwerks bzw. der Peer-to-Peer-Anwendung einen oder mehrere geeignete/n Partner für den Austausch von einem Versorgungsmedium suchen und eine Versorgungsmedium-Transaktions-Vereinbarung mittels der der Peer-to-Peer-Anwendung generiert werden. Vorzugweise kann jedem Teilnehmer, also insbesondere jeder Entität des Versorgungssystems die Liste aller Teilnehmer bzw. Entitäten bekannt sein, wie ein Identifizierer z.B. in Form einer Kommunikationsadresse.

Nach der Generierung einer Versorgungsmedium-Transaktions-Vereinbarung kann das Versorgungsmedium zwischen den Entitäten entsprechend ausgetauscht, beispielsweise von der ersten Entität an die weitere Entität oder von der weiteren Entität an die erste Entität unter Verwendung des physikalischen Versorgungskanalnetzes übertragen werden.

Gemäß einer ersten Ausführungsform des Systems gemäß der vorliegenden Erfindung kann die Peer-to-Peer-Anwendung ein dezentrales Register sein. Das dezentrale Register kann zumindest von jedem Teilnehmer des Peer-to-Peer-Netzwerks lesbar sein. Insbesondere können sämtliche Kommunikationsvorrichtungen und sämtliche weitere Rechner des Peer-to-Peer-Netzwerks vorzugsweise sämtliche Informationen in der als Register gebildeten Peer-to-Peer-Anwendung lesen. Bevorzugt können auch sämtliche Kommunikationsvorrichtungen und sämtliche weitere Rechner des Peer-to-Peer-Netzwerks Nachrichten an die Peer-to-Peer-Anwendung senden bzw. in diese schreiben. In einfacher Weise können Informationen bevorzugt sämtlichen Teilnehmern zugänglich gemacht werden. Dies erlaubt die Durchführung einer Überprüfung der in dem dezentralen Register gespeicherten Informationen. Insbesondere kann vorzugsweise jeder Rechner des Peer-to-Peer-Netzwerks eingerichtet sein, eine Überprüfung einer neuen Information insbesondere basierend auf älteren in der Peer-to-Peer-Anwendung abgespeicherten Informationen durchzuführen.

Darüber hinaus kann gemäß einer weiteren Ausführungsform des erfindungsgemäßen Systems jeder Rechner bzw. Knoten des Peer-to-Peer-Netzwerks die Peer-to-Peer-Anwendung aufweisen. Vorzugsweise kann jeder Rechner jeweils den kompletten Dateninhalt, zumindest jedoch einem Teil des Dateninhalts der Peer-to-Peer-Anwendung, insbesondere des dezentralen Registers, umfassen. Beispielsweise kann vorgesehen sein, dass nach einer positiven Verifizierung einer neuen in die Peer-to-Peer-Anwendung geschriebenen Information diese von sämtlichen Rechnern, zumindest von einem Teil der Rechner, abgespeichert wird. Die Manipulationssicherheit kann hierdurch weiter verbessert werden.

Um neue Informationen manipulationssicher zu speichern, kann die Peer-to-Peer-Anwendung Verschlüsslungsmittel und/oder Signaturmittel und/oder Verifikationsmittel, beispielsweise geeignete Hash-Funktionen, umfassen. Mindestens ein Mittel der vorgenannten Mittel kann zum Speichern von insbesondere zumindest jeder generierten Versorgungsmedium-Transaktions-Vereinbarung eingerichtet sein, Insbesondere kann vorgesehen sein, dass durch die Hash-Funktion eine Verknüpfung mit mindestens einer vorherigen im dezentralen Register gespeicherten Information hergestellt wird. Es können weitere Daten, wie Anfragen, Stamm-, Kontext- und/oder Transaktionsdaten einer Entität gespeichert werden.

Bei einer besonders bevorzugten Ausführungsform kann die Peer-to-Peer-Anwendung eine Blockchain umfassend mindestens zwei miteinander verknüpfte Blöcke sein. Die Blockchain-Technologie bzw. "decentral ledger technology" wird bereits bei der Bezahlung mittels einer Cryptowährung, wie Bitcoin, eingesetzt. Es ist erkannt worden, dass durch eine spezielle Konfiguration eine Blockchain eingerichtet werden kann, zumindest eine Versorgungsmedium-Transaktions-Vereinbarung zwischen zwei Entitäten insbesondere manipulationssicher zu generieren. Die Blockchain gemäß der vorliegenden Ausführungsform ist insbesondere ein dezentralisiertes, Peer-to-Peer-basiertes Register, in dem alle Versorgungsmedium-Transaktions-Vereinbarungen und sonstigen Nachrichten von Entitäten protokolliert werden können. Eine Blockchain ist als technisches Mittel besonders geeignet, eine zentrale Instanz in einfacher und gleichzeitig sicherer Weise zu ersetzen.

Darüber hinaus kann gemäß einer Ausführungsform des Systems vorgesehen sein, dass die Kommunikationsvorrichtung eingerichtet ist, basierend auf einem für die Entität der Kommunikationsvorrichtung erstellten Versorgungsmediumplan mindestens eine Anfragenachricht und/oder mindestens eine Annahmenachricht zu generieren. Vorzugsweise kann für jede Entität ein Versorgungsmediumplan erstellt werden. Ein Versorgungsmediumplan zeichnet sich vorliegend dadurch aus, dass er eine insbesondere für jede Entität individuelle Prognose für mindestens einen zukünftigen Zeitraum hinsichtlich des Bedarfs und/oder Angebots an einem Versorgungsmedium umfasst. Eine Entität kann geeignete Mittel umfassen oder mit diesen verbindbar sein, um einen Versorgungsmediumplan zu erstellen. Beispielsweise kann die Erstellung des Versorgungsmediumplans auf historischen Daten hinsichtlich des vergangenen Bedarfs/Angebots an einem Versorgungsmedium, (externen) Prognosedaten, wie Wetterdaten, und/oder Benutzervorgaben, wie Kalenderangaben, Aufenthaltsorte von einer Person (einschließlich Prognose, wann Bewohner nach Hause kommt und/oder wann ein Unternehmen mit der Verarbeitung beginnt), Füllstandsdaten eines Speichers, wie einer Batterie, etc., beruhen. Die Erstellung eines (optimierten) Versorgungsmediumplans kann insbesondere von der Entität, vorzugsweise einer lokalen Anwendung eingerichtet zum Kommunizieren mit der mindestens einen Peer-to-Peer-Anwendung, durchgeführt werden. Beispielhaft kann bei einem Gasversorgungssystem die Erstellung des Versorgungsmediumplans auf dem historischen Verbrauch von Gas durch die Entität beruhen. Zudem können beispielsweise Wetterprognosen, wie Temperaturdaten, berücksichtigt werden. In ähnlicher Weise kann bei anderen Versorgungssystemarten ein Versorgungsmediumplan erstellt werden. Basierend auf dem Versorgungsmediumplan kann die Kommunikationsvorrichtung für die Entität eine Anfragenachricht an das Peer-to-Peer-Netzwerk, insbesondere an die zuvor beschriebene Peer-to-Peer-Anwendung übertragen. Vorzugsweise jede Entität bzw. deren zugeordnete Kommunikationsvorrichtung kann die übertragenen Informationen lesen. In einer Ausführungsform kann eine Kommunikationsvorrichtung basierend auf einem (eigenen) Versorgungsmediumplan und insbesondere einer Anfragenachricht einer weiteren Entität eine Annahmenachricht generieren und insbesondere an das Peer-to-Peer-Netzwerk, wie die zuvor beschriebene Peer-to-Peer-Anwendung, übertragen. In einfacher Weise kann mittels des Peer-to-Peer-Netzwerks und der Peer-to-Peer-Anwendung eine für mindestens zwei Entitäten nahezu optimale Versorgungsmedium-Transaktions-Vereinbarung vorbereitet werden.

In einer bevorzugten Ausführungsform kann eine Anfragenachricht eine Versorgungsmediummengenangabe, einen Zeitraum und/oder mindestens ein Transaktionskriterium umfassen. Vorzugsweise kann eine Anfragenachricht zumindest die vorgenannten Datenangaben aufweisen. Ferner kann zusätzlich ein Identifizierer des Absenders, wie eine eindeutige und jedem Teilnehmer des Peer-to-Peer-Netzwerks bekannte Adresse, ein Zeitstempel, weitere Transaktionskriterien, etc. von einer Anfragenachricht umfasst sein. Alternativ oder zusätzlich kann vorgesehen sein, dass eine Annahmenachricht eine Versorgungsmediummengenangabe, einen Zeitraum, und/oder mindestens ein Transaktionskriterium umfasst. Vorzugsweise kann eine Anfragenachricht zumindest die vorgenannten Datenangaben und insbesondere einen Bezug zu einer Anfragenachricht einer anderen Entität aufweisen. Ferner kann zusätzlich ein Identifizierer des Absenders, wie eine eindeutige und jedem Teilnehmer des Peer-to-Peer-Netzwerks bekannte Adresse, ein Zeitstempel, weitere Transaktionskriterien, etc. von einer Anfragenachricht umfasst sein.

Um einen korrekten Austausch eines Versorgungsmediums entsprechend einer generierten Versorgungsmedium-Transaktions-Vereinbarung zwischen zwei Entitäten sicherzustellen, kann mindestens eine Zählervorrichtung eingerichtet zum Erfassen der über einen Anschluss einer Entität mit dem physikalischen Versorgungskanalnetz übertragenen Versorgungsmediummenge vorgesehen sein. Vorzugsweise kann jede Entität über eine entsprechende Zählervorrichtung verfügen oder zumindest mit ihr verbindbar sein. Eine Zählervorrichtung kann insbesondere eine intelligente Zählervorrichtung (smart meter), beispielsweise ein Gaszähler, ein Stromzähler, ein Durchflussmengenzähler, etc., sein. Vorzugsweise kann die Versorgungsmediummenge über der Zeit erfasst werden. Dies erlaubt es, die in einem bestimmten Zeitraum übertragene, also eingespeiste und/oder bezogene, Versorgungsmediummenge zu bestimmen. Die Kommunikationsvorrichtung kann eingerichtet sein, eine erfasste Versorgungsmediummenge an die Peer-to-Peer-Anwendung zu übertragen. Beispielsweise kann eine Kommunikationsverbindung zwischen der Kommunikationsvorrichtung und der mindestens einen einer Entität zugeordneten Zählervorrichtung vorgesehen sein. Vorzugsweise kann die Kommunikationsvorrichtung abhängig von einer Versorgungsmedium-Transaktions-Vereinbarung die während des in der Vereinbarung festgelegten Zeitraums gemessene Versorgungsmediummenge an die Peer-to-Peer-Anwendung übertragen. Vorzugsweise in entsprechender Weise kann die weitere Entität die Versorgungsmediummenge erfassen und an die Peer-to-Peer-Anwendung übertragen. Anschließend kann eine Überprüfung der an die Peer-to-Peer-Anwendung übertragenen Informationen, insbesondere der tatsächlich gelieferten und/oder empfangenen Versorgungsmediummenge, von dem Peer-to-Peer-Netzwerk, wie z.B. oben beschrieben, durchgeführt werden. In einfacher Weise kann ohne zentrale Instanz der korrekte physikalische Austausch eines Versorgungsmediums sichergestellt werden. Eine Manipulation durch eine Entität oder durch Dritte kann verhindert werden.

Vorzugsweise abhängig von einer positiven zuvor beschriebenen Überprüfung der tatsächlich gelieferten und/oder empfangenen Versorgungsmediummenge kann die Kommunikationsvorrichtung eingerichtet sein, eine Generierung einer Transaktionskriterium-Transaktion basierend zumindest auf einem in einer Versorgungsmedium-Transaktions-Vereinbarung festgelegten Transaktionskriterium und der erfassten Versorgungsmediummenge zu bewirken. Beispielsweise kann als Transaktionskriterium ein bestimmter Betrag insbesondere einer Cryptowährung festgelegt worden sein. Wurde die Lieferung von einem Versorgungsmedium entsprechend der Versorgungsmedium-Transaktions-Vereinbarung durchgeführt, kann mittels des Peer-to-Peer-Netzwerks, insbesondere der Peer-to-Peer-Anwendung, der festgelegte Betrag im Rahmen einer Transaktionskriterium-Transaktion an die weitere Entität transferiert werden. Ähnlich wie oben beschrieben können auch bei dieser Transaktion eindeutige Schlüssel der Entitäten zur Verifikation verwendet werden. Die Schlüssel und insbesondere der tatsächliche Besitz des Betrags durch eine Entität kann durch das Peer-to-Peer-Netzwerk überprüft werden, wie z.B. oben beschrieben wurde. Eine sichere Bezahlung mittels eines Peer-to-Peer-Netzwerks ohne zentrale Instanz kann bereitgestellt werden. Transaktionskosten können weiter reduziert werden.

Bei Versorgungskanalnetzen kann es für ein sicheres Betreiben des Versorgungskanalnetzes erforderlich sein, dass der Bedarf und das Angebot an dem Versorgungsmedium (nahezu) ausgeglichen sein müssen. Es kann jedoch vorkommen, dass eine oder mehrere Anfragenachrichten von Entitäten nicht erfüllt werden können. Beispielsweise kann es vorkommen, dass der Bedarf an einem Versorgungsmedium einer Entität nicht von den anderen Entitäten bereitgestellt werden kann. Auch kann es auftreten, dass die Entitäten nicht die von einer anderen Entität bereitgestellte Versorgungsmediummenge abnehmen können. Hierdurch kann es in den Versorgungskanalnetzen zu kritischen Netzzuständen kommen. Um dennoch einen sicheren und stabilen Betrieb eines Versorgungssystems zu gewährleisten, kann gemäß einer weiteren Ausführungsform das Versorgungssystem eine Ausgleichsentität eingerichtet zum Bewirken einer Generierung von jeweiligen Versorgungsmedium-Transaktions-Vereinbarungen mit allen Entitäten, deren Anfragenachricht unerfüllt sind, mittels der Peer-to-Peer-Anwendung. Mit anderen Worten kann die Ausgleichsentität eingerichtet sein, den Bedarf an Versorgungsmedium zu decken und das Angebot von Versorgungsmedium abzunehmen. Bei einer Ausgleichsentität kann es sich um ein Versorgungsmediumunternehmen, wie ein Gasversorgungsunternehmen, ein Energieversorgungsunternehmen, etc., handeln. Indem eine Ausgleichsentität in einem Versorgungssystem vorgesehen ist, kann sichergestellt werden, dass der Bedarf und das Angebot an dem Versorgungsmedium (nahezu) ausgeglichen sein können. Des Weiteren kann die Ausgleichsidentität von den Peers gemeldete ungenutzte Flexibilitäten an den Netzbetreiber oder andere Marktteilnehmer außerhalb des Peer-to-Peer-Netzwerkes melden und verkaufen. Der Käufer der Flexibilität kann diese dann direkt über einen Steuerungskanal entweder über die Ausgleichsentität oder direkt ansteuern.

Auch kann es vorkommen, dass ein tatsächlicher Bedarf bzw. ein tatsächliches Angebot von einem Versorgungsmedium bei einer Entität von dem zuvor erstellten Versorgungsmediumplan abweichen kann. Vorzugsweise kann eine Entität, insbesondere eine Recheneinrichtung, wie die Kommunikationsvorrichtung, eingerichtet sein, eine vorzugsweise regelmäßige Überprüfung, ob die von der Entität für zukünftige Zeiträume in Versorgungsmedium-Transaktions-Vereinbarungen vereinbarten Versorgungsmediummengen tatsächlich bereitgestellt und/oder abgenommen werden können. Beispielsweise kann die Überprüfung zu einem bestimmten Zeitpunkt vor dem in einer Versorgungsmedium-Transaktions-Vereinbarungen festgelegten Zeitraum und/oder während des tatsächlichen Austausches des Versorgungsmediums, beispielsweise durch Vergleich der messbaren Ist-Austauschmenge mit der festgelegten Austauschmenge, durchgeführt werden.

Für den Fall, dass eine Abweichung von der Entität detektiert wird, kann die Kommunikationsvorrichtung vorzugsweise die Generierung einer weiteren Versorgungsmedium-Transaktions-Vereinbarung über die festgestellte Abweichung mit einer weiteren Entität und/oder mit einer Entität außerhalb des Peer-to-Peer-Netzwerks bewirken.

Ein weiterer Aspekt der Erfindung ist ein Verfahren zum Betreiben eines Systems, insbesondere eines zuvor beschriebenen Systems. Das System umfasst eine erste mit mindestens einem physikalischen Versorgungskanalnetz verbindbare Entität, mindestens eine weitere mit dem physikalischen Versorgungskanalnetz verbindbare Entität, und mindestens ein Peer-to-Peer-Netzwerk eingerichtet zum Bereitstellen einer Peer-to-Peer-Anwendung. Das Verfahren umfasst:
- Bewirken einer Generierung von mindestens einer Versorgungsmedium-Transaktions-Vereinbarung über den physikalischen Austausch eines Versorgungsmediums zwischen der ersten Entität und der weiteren Entität mittels der Peer-to-Peer-Anwendung.

Ein noch weiterer Aspekt ist eine Kommunikationsvorrichtung für eine erste mit mindestens einem physikalischen Versorgungskanalnetz verbindbare Entität, umfassend:
- mindestens ein Kommunikationsmodul eingerichtet zum Kommunizieren mit einem eine Peer-to-Peer-Anwendung bereitstellenden Peer-to-Peer-Netzwerk, und
- das Kommunikationsmodul zum Bewirken einer Generierung einer Versorgungsmedium-Transaktions-Vereinbarung über den physikalischen Austausch eines Versorgungsmediums zwischen der ersten Entität und einer weiteren Entität mittels der Peer-to-Peer-Anwendung eingerichtet ist.

Bevorzugt kann jede Entität eines zuvor beschriebenen Systems eine derartige Kommunikationsvorrichtung umfassen. Die Kommunikationsvorrichtung kann zumindest teilweise aus Hardware und/oder Software gebildet sein.

Ein weiterer Aspekt der Erfindung ist ein Verfahren zum Betreiben einer Kommunikationsvorrichtung für eine erste mit mindestens einem physikalischen Versorgungskanalnetz verbindbare Entität, umfassend:
- Bewirken einer Generierung einer Versorgungsmedium-Transaktions-Vereinbarung über den physikalischen Austausch eines Versorgungsmediums zwischen der ersten Entität und einer weiteren Entität mittels der Peer-to-Peer-Anwendung.

Das Verfahren kann insbesondere zum Betreiben der zuvor beschriebenen Kommunikationsvorrichtung verwendet werden.

Ein noch weiterer Aspekt der Erfindung ist ein Computerprogramm mit Instruktionen ausführbar auf einem Prozessor derart, dass eine Kommunikationsvorrichtung gemäß dem zuvor beschriebenen Verfahren betrieben wird.

Ein weiterer Aspekt ist eine Peer-to-Peer-Anwendung, umfassend:
- Mittel zum Empfangen von mindestens einer Nachricht von einer Kommunikationsvorrichtung einer mit einem physikalischen Versorgungskanalnetz verbindbaren ersten Entität, wobei durch die Nachricht von der ersten Entität die Generierung einer Versorgungsmedium-Transaktions-Vereinbarung über den physikalischen Austausch eines Versorgungsmediums zwischen der ersten Entität und einer weiteren Entität bewirkt werden kann, und
- Mittel zum Generieren der Versorgungsmedium-Transaktions-Vereinbarung nach Empfang der Nachricht.

Insbesondere kann die Peer-to-Peer-Anwendung in einem zuvor beschriebenen System verwendet und/oder von einer zuvor beschriebenen Kommunikationsvorrichtung ansteuerbar sein. Die Peer-to-Peer-Anwendung kann zumindest teilweise aus Hardware und/oder Software gebildet sein. Insbesondere kann die erfindungsgemäße Peer-to-Peer-Anwendung auf der Blockchain-Technologie basieren.

Ein weiterer Aspekt der Erfindung ist ein Verfahren zum Betreiben einer Peer-to-Peer-Anwendung, umfassend:
- Empfangen von mindestens einer Nachricht von einer Kommunikationsvorrichtung einer mit einem physikalischen Versorgungskanalnetz verbindbaren ersten Entität, wobei durch die Nachricht von der ersten Entität die Generierung einer Versorgungsmedium-Transaktions-Vereinbarung über den physikalischen Austausch eines Versorgungsmediums zwischen der ersten Entität und einer weiteren Entität bewirkt werden kann, und
- Generieren der Versorgungsmedium-Transaktions-Vereinbarung nach Empfang der Nachricht.

Das Verfahren kann insbesondere zum Betreiben der zuvor beschriebenen Peer-to-Peer-Anwendung vorgesehen sein.

Ein noch weiterer Aspekt der Erfindung ist ein Computerprogramm mit Instruktionen ausführbar auf einem Prozessor derart, dass eine Peer-to-Peer-Anwendung gemäß dem zuvor beschriebenen Verfahren betrieben wird.

Die Merkmale der Verfahren, Systeme bzw. Netze, Vorrichtungen und Computerprogramme sind frei miteinander kombinierbar.

Es gibt nun eine Vielzahl von Möglichkeiten, die erfindungsgemäßen Verfahren, das erfindungsgemäße Systeme, die erfindungsgemäße Vorrichtung und die erfindungsgemäßen Computerprogramme auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Versorgungssystems gemäß dem Stand der Technik;
- Fig. 2: eine schematische Ansicht eines Ausführungsbeispiels eines Systems gemäß der vorliegenden Erfindung;
- Fig. 3: eine schematische Ansicht eines Ausführungsbeispiels einer Entität gemäß der vorliegenden Erfindung umfassend eine beispielhafte Kommunikationsvorrichtung gemäß der vorliegenden Erfindung;
- Fig. 4: eine schematische Ansicht eines Ausführungsbeispiels einer Peer-to-Peer-Anwendung gemäß der vorliegenden Erfindung;
- Fig. 5: eine schematische Ansicht eines weiteren Ausführungsbeispiels eines Systems gemäß der vorliegenden Erfindung;
- Fig. 6: eine schematische Ansicht eines weiteren Ausführungsbeispiels eines Systems gemäß der vorliegenden Erfindung;
- Fig. 7: ein Diagramm eines Ausführungsbeispiels eines Verfahrens gemäß der vorliegenden Erfindung;
- Fig. 8: ein Diagramm eines weiteren Ausführungsbeispiels eines Verfahrens gemäß der vorliegenden Erfindung;
- Fig. 9: ein Diagramm eines weiteren Ausführungsbeispiels eines Verfahrens gemäß der vorliegenden Erfindung; und
- Fig. 10: ein Diagramm eines weiteren Ausführungsbeispiels eines Verfahrens gemäß der vorliegenden Erfindung.

In den Figuren werden für gleiche Elemente gleiche Bezugszeichen verwendet.

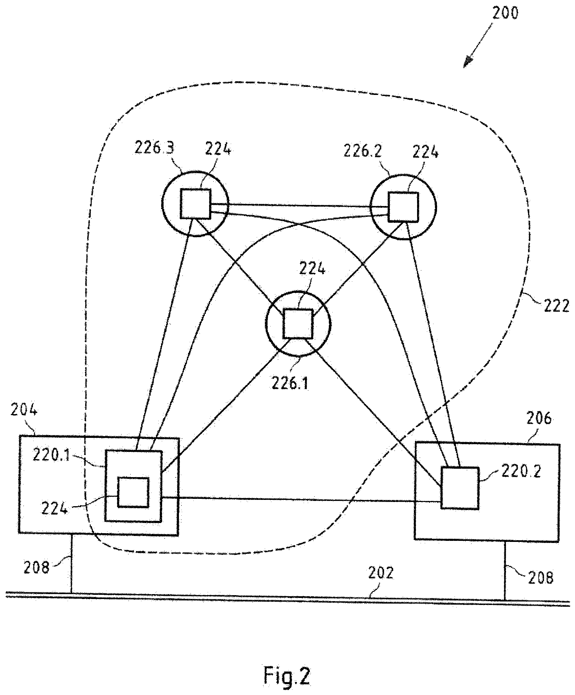

Die Figur 2 zeigt eine schematische Ansicht eines Ausführungsbeispiels eines Systems 200, insbesondere eines Versorgungssystems 200, gemäß der vorliegenden Erfindung. Das Versorgungsystem 200 kann ein elektrisches Versorgungsnetz, ein Gasversorgungsnetz, ein Wasserversorgungsnetz oder ein Fernwärmenetz sein.

Vorliegend umfasst das System 200 beispielhaft eine erste Entität 204 und eine weitere Entität 206. Es versteht sich, dass mehr als zwei Entitäten 204, 206 vorgesehen sein können. Eine Entität 204, 206 kann ein Gebäude, ein Haushalt, eine Anlage bzw. Maschine, ein elektronisches Gerät, etc. sein.

Wie ferner zu erkennen ist, weist jede Entität 204, 206 jeweils mindestens einen Anschluss 208 eingerichtet zum Verbinden der Entität 204, 206 mit einem Versorgungskanalnetz 202 auf. Die Verbindung 208 kann trennbar, beispielsweise durch einen Schalter, ein Ventil, etc., ausgebildet sein. Die Art des Versorgungskanalnetzes 202 richtet sich nach der Art des Versorgungssystems 200. Bei einem Gasversorgungsnetz 200 kann es sich beispielsweise um ein Rohrleitungsnetz 202 für Gas handeln. Entsprechend geeignete Anschlüsse 208 können für ein Stromnetz, ein Wassernetz oder ein Fernwärmenetz vorgesehen sein. Es versteht sich, dass eine Entität Teil von mehr als einem Versorgungssystem 200 sein kann.

Ein wesentlicher Unterschied zu einem Stand der Technik System, wie dem System 100 gemäß der Figur 1, besteht darin, dass keine zentrale Instanz vorgesehen ist. Vorliegend weist das System 200 ein Peer-to-Peer-Netzwerk 222 bzw. ein Rechner-Rechner-Netzwerk 222 auf. Das Peer-to-Peer-Netzwerk 222 umfasst eine Vielzahl von Knoten 226.1 bis 226.3 bzw. Rechnern 226.1 bis 226.3. Ein Peer-to-Peer-Netzwerk 222 zeichnet sich vorliegend dadurch aus, dass vorzugsweise jeder Knoten und/oder Teilnehmer mit jedem anderen Knoten und/oder Teilnehmer verbunden ist. Zudem sind die Rechner gleichberechtigt, wodurch sie sich von einer Server-Client-Struktur unterscheiden.

Die dargestellten drei Knoten 226.1 bis 226.3, beispielsweise Computer 226.1 bis 226.3, umfassen (jeweils) eine Peer-to-Peer-Anwendung 224. Wie zu erkennen ist, ist auf jedem Knoten 226.1 bis 226.3 die gleiche Peer-to-Peer-Anwendung 224 implementiert. Vorzugsweise kann die Peer-to-Peer-Anwendung 224 ein von insbesondere allen Teilnehmern (nicht nur der Knoten) des Peer-to-Peer-Netzwerks 222 einsehbares öffentliches Register 224 sein. Jeder Knoten 226.1 bis 226.3 weist vorzugweise das (gesamte) öffentliche Register 224 auf. Auch kann vorgesehen sein, dass auf einem Knoten nur ein Teil des Registers vorgesehen ist. In einer besonders bevorzugten Ausgestaltung kann die Peer-to-Peer-Anwendung 224 eine Blockchain 224 sein.

Ferner ist zu erkennen, dass vorliegend jede Entität 204, 206 eine Kommunikationsvorrichtung 220.1, 220.2 aufweist. Eine Kommunikationsvorrichtung 220.1, 220.2 ist dazu eingerichtet, zumindest mit dem Peer-to-Peer-Netzwerk 222, also den Knoten des 226.1 bis 226.3, zu kommunizieren. Mit anderen Worten ist die Kommunikationsvorrichtung 220.1, 220.2 bzw. die zu dieser Kommunikationsvorrichtung 220.1, 220.2 korrespondierende Entität 204, 206 zumindest Teilnehmer des Peer-to-Peer-Netzwerks 222. Hierbei sind jedem Teilnehmer des Peer-to-Peer-Netzwerks 222 vorzugsweise sämtliche Teilnehmer des Peer-to-Peer-Netzwerks 222 bekannt.

Im vorliegenden Fall ist die erste Kommunikationsvorrichtung 220.1 ein Knoten bzw. Rechner des Peer-to-Peer-Netzwerks 222. So weist die Kommunikationsvorrichtung 220.1 ebenfalls die Peer-to-Peer-Anwendung 224 auf. Vorliegend kann mittels der Peer-to-Peer-Anwendung 224 eine Versorgungsmedium-Transaktions-Vereinbarung in manipulationssicherer Weise zwischen den Entitäten 204, 206 über den Austausch eines Versorgungsmediums zwischen den Entitäten 204, 206 generiert werden. Hierzu kann jede Kommunikationsvorrichtung mit der Peer-to-Peer-Anwendung 224 kommunizieren, um die Generierung einer Versorgungsmedium-Transaktions-Vereinbarung zu bewirken. Anschließend kann entsprechend der generierten Vereinbarung das Versorgungsmedium, wie elektrischer Strom bzw. elektrische Leistung, Wasser, wie Frisch- oder Abwasser, gasförmige Medien, wie Erdgas oder einem ähnlichen (brennbaren) Gas, Wärme, beispielsweise in Form warmer Luft, und/oder Kälte, beispielsweise in Form kalter Luft, übertragen werden.

Ein Ausführungsbeispiel einer erfindungsgemäßen Peer-to-Peer-Anwendung wird nachfolgend ebenso wie die Funktionsweise des Systems näher erläutert.

Die nachfolgenden Ausführungsbeispiele beziehen sich für eine bessere Veranschaulichung auf ein Versorgungssystem in der Form eines elektrischen Stromnetzes. Die Erfindung ist hierauf jedoch nicht beschränkt. Insbesondere lassen sich die nachfolgenden Ausführungen auf andere Versorgungsysteme bzw. -netze, wie Gasversorgungsnetze, Wasserversorgungsnetze oder Fernwärmenetze, übertragen.

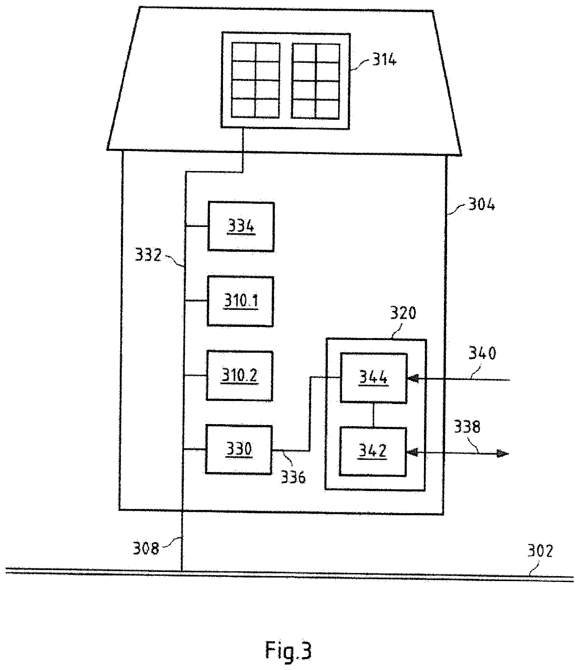

Die Figur 3 zeigt eine schematische Ansicht eines Ausführungsbeispiels einer Entität 304 gemäß der vorliegenden Erfindung, wobei die Entität 304 ein Ausführungsbeispiel einer Kommunikationsvorrichtung 320 gemäß der vorliegenden Erfindung umfasst.

Bei der Entität 304 kann es sich um ein Gebäude 304 bzw. Haushalt 304 handeln. Die Entität 304 ist mit einem Versorgungskanalnetz 302 über einen Anschluss 308 verbindbar. Das Versorgungskanalnetz 302 kann ein elektrisches Stromnetz 302 umfassend elektrische Energieleitungen, Transformatoren, etc., sein.

Darüber hinaus ist im vorliegenden Ausführungsbeispiel ein interner Stromkreis 332 der Entität 304 über den Anschluss 308 mit dem öffentlichen oder privaten Stromnetz 302 verbunden.

Beispielhaft sind an dem Stromkreis 332 zwei elektrische Verbraucher 310.1, 310.2 angeschlossen. Beispielhafte und nicht abschließende elektrische Verbraucher 310.1, 310.2 sind Kühlschränke, Beleuchtungseinrichtungen, Fernseher, Computer, Waschmaschinen, Küchengeräte, etc. Es versteht sich, dass eine Entität 304 mehr als zwei elektrische Verbraucher 310.1, 310.2 umfassen kann.

Neben den elektrischen Verbrauchern 310.1, 310.2 weist die Entität 304 vorliegend einen elektrischen Erzeuger 314 in Form einer Photovoltaikanlage 314 auf. Es versteht sich, dass alternativ oder zusätzlich auch andere elektrische Erzeuger, wie eine Mikro-KWK, (Klein-)Windkraftanlagen, etc., vorgesehen sein können. Die von dem Erzeuger 314 gelieferte Leistung kann von den Verbrauchern 310.1, 310.2 verbraucht, in einen elektrischen Energiespeicher 334, wie eine Batterie, (zwischen)gespeichert und/oder in das Stromnetz 302 eingespeist werden.

Darüber hinaus ist vorliegend eine Zählervorrichtung 330 mit dem elektrischen Stromkreis 332 verbunden. Die Zählervorrichtung 330 kann einen Zähler umfassen, um die aus dem Stromnetz 302 bezogene Leistungsmenge und die in das Stromnetz 302 eingespeiste Leistungsmenge zu bestimmen. In einer Ausführungsform kann die Zählervorrichtung 330 mindestens zwei Zähler aufweisen. Die zwei Zähler können in einem gemeinsamen Gehäuse verbaut sein oder separate Einheiten bilden. Es versteht sich, dass auch mehr als zwei Zähler vorgesehen sein können.

Der Vorteil von zwei Zählern liegt insbesondere darin, dass die Entität 304 einerseits mit einer zentralen Instanz, wie einem zentralen Server eines Netzbetreibers, eine (grundsätzliche) Versorgungsmedium-Transaktion-Vereinbarung und andererseits individuelle Versorgungsmedium-Transaktion-Vereinbarungen mit anderen Entitäten mittels des Peer-to-Peer-Netzwerks generieren kann. Um den jeweiligen Leistungsfluss bzw. Stromfluss eindeutig einer Versorgungsmedium-Transaktion-Vereinbarung zuordnen zu können, kann ein Zähler beispielsweise die Gesamtmenge erfassen und der mindestens eine weitere Zähler die Menge/n erfassen, die während Zeiträumen, in denen individuelle Versorgungsmedium-Transaktion-Vereinbarungen geschlossen worden sind, fließen. Anschließend kann durch Rechenoperationen eine eindeutige Zuordnung einer gelieferten oder empfangenen und erfassten Leistungsmenge zu den unterschiedlichen Versorgungsmedium-Transaktion-Vereinbarungen bestimmt werden.

Es versteht sich, dass weitere Zählvorrichtungen vorgesehen sein können, um beispielsweise den Verbrauch einzelner Verbraucher oder die von einem Erzeuger gelieferte Leistung individuell zu bestimmen.

Die Entität 304 umfasst zudem eine Kommunikationsvorrichtung 320. Die Kommunikationsvorrichtung 320 kann beispielsweise zumindest ein Teil einer Recheneinrichtung, wie einem Computer, sein. Insbesondere kann die Kommunikationsvorrichtung zumindest teilweise aus einem Softwaremodul und/oder zumindest teilweise aus einem Hardwaremodul gebildet sein.

Die Kommunikationsvorrichtung 320 weist insbesondere ein Kommunikationsmodul 342 auf, um mit dem Peer-to-Peer-Netzwerk über eine Kommunikationsverbindung 338 (bi-direktional) zu kommunizieren. Ferner kann eine Kommunikationsvorrichtung 320 ein mit dem Kommunikationsmodul 342 verbindbares Verarbeitungsmodul 344 aufweisen. Das Verarbeitungsmodul 344 kann zumindest eingerichtet sein, Peer-to-Peer-anwendungskompatible Nachrichten zu generieren. Ferner kann das Verarbeitungsmodul 344 mindestens einen Dateneingang aufweisen. Beispielsweise kann eine interne Kommunikationsverbindung 336 mit der Zählervorrichtung 330 vorgesehen sein. Ferner können Daten von externen Datenquellen, wie Wetterdatenquellen, etc., von dem Verarbeitungsmodul 344 über ein Kommunikationsnetz 340 empfangen und insbesondere verarbeitet werden. Auch kann die Kommunikationsvorrichtung weitere Schnittstellen zu anderen Einrichtungen aufweisen. Insbesondere können Benutzerschnittstellen, wie ein Bildschirm und/oder Eingabemittel, vorgesehen sein. Eine detailliertere Beschreibung der Funktionsweise der Kommunikationsvorrichtung 320 erfolgt nachfolgend.

Ferner sei angemerkt, dass bei einer vorteilhaften Ausgestaltung Daten, wie Wetterprognosen und/oder Marktdaten, auch als sogenannter Feed von der Peer-to-Peer-Anwendung insbesondere jedem Peer zur Verfügung gestellt werden können. Beispielsweise können sich die Teilnehmer auf einen oder mehrere Wetterdatenanbieter geeinigt haben. In diesem Fall kann die mindestens eine Wetterdatenquelle die Wetterprognosedaten an die Peer-to-Peer-Anwendung übertragen. Die Wetterquelle kann von mindestens einem Teil der Peers validiert worden sein. Vorzugsweise jedem Peer stehen dann mittels der Peer-to-Peer-Anwendung die gleichen Wetterdaten zur Verfügung. Es versteht sich, dass die Erstellung eines Versorgungsmediumplans einer Entität basierend auf anderen Wetterdaten erfolgen kann.

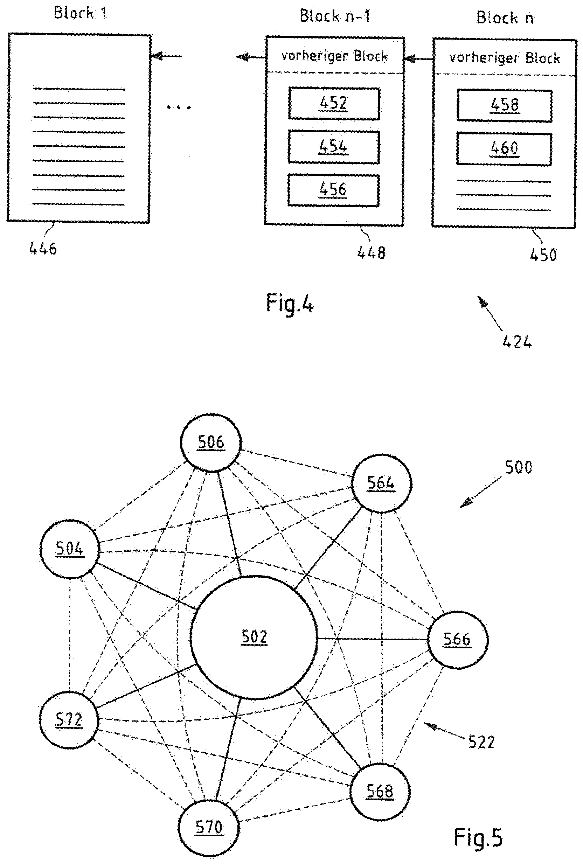

Die Figur 4 zeigt eine schematische Ansicht eines Ausführungsbeispiels einer Peer-to-Peer-Anwendung 424 gemäß der vorliegenden Erfindung. Die Peer-to-Peer-Anwendung 424 ist insbesondere ein für die Teilnehmer eines Peer-to-Peer-Netzwerks 424 einsehbares Register, in welches Nachrichten von Entitäten bzw. Teilnehmern des Peer-to-Peer-Netzwerks geschrieben und/oder ausgelesen werden können. Bei einem bevorzugten Ausführungsbeispiel kann die Peer-to-Peer-Anwendung 424 eine Blockchain 424 sein.

Nachfolgend wird bei der näheren Beschreibung des vorliegenden Ausführungsbeispiels davon ausgegangen, dass es sich bei der Peer-to-Peer-Anwendung 424 um eine Blockchain 424 handelt. Jedoch lassen sich die nachfolgenden Ausführungen problemlos auf andere Peer-to-Peer-Anwendungen übertragen.

Die Blockchain 424 wird aus mindestens einem Block 446 bis 450, vorzugsweise eine Vielzahl von miteinander verknüpften Blöcken 446 bis 450, gebildet. Der erste Block 446 kann auch Genesis-Block 446 genannt werden. Wie zu erkennen ist, bezieht sich ein Block 448, 450 (außer dem ersten Block) auf den jeweils vorherigen Block 446, 448. Ein neuer Block kann durch einen rechenintensiven Prozess (zum Beispiel so genanntes "Mining" oder durch einen entsprechenden Prozess) erschaffen werden und insbesondere allen Teilnehmern des Peer-to-Peer-Netzwerks bereitgestellt werden.

Die vorliegende Blockchain 424 ist insbesondere dazu eingerichtet, Nachrichten von einer Kommunikationsvorrichtung eines Teilnehmers des Peer-to-Peer-Netzwerks zu empfangen und diese Nachricht in der Blockchain 424 zu speichern. Insbesondere kann eine neue Nachricht in dem aktuellen Block 450 der Blockchain 424 gespeichert und veröffentlicht werden. Aufgrund der Ausgestaltung einer Blockchain 424 als öffentliches Register 424, kann die Nachricht einer Kommunikationsvorrichtung von bevorzugt sämtlichen Teilnehmern des Peer-to-Peer-Netzwerks gelesen werden.

In der vorliegenden Blockchain 424 können unterschiedliche Arten von Nachrichten beispielsweise innerhalb eines Smart Contracts (Algorithmus und/oder Speicher auf der Blockchain) verarbeitet und/oder gespeichert werden. Beispielsweise kann die Nachricht 452 eine Anfragenachricht 452 sein. Eine Anfragenachricht zeichnet sich dadurch aus, dass sie folgende Daten umfassen kann:
- Mengenangabe:: Menge des Versorgungsmediums, die von einer Entität gewünscht oder zur Verfügung gestellt wird
- Zeitangabe:: zukünftiger Zeitraum, an den die Versorgungsmengenangabe gewünscht oder zur Verfügung gestellt wird
- Transaktionskriterium:: Kriterium, welches von der weiteren Entität erfüllt werden muss, um eine Versorgungsmedium-Transaktions-Vereinbarung über die angegebene Menge und Zeitraum abzuschließen

Es versteht sich, dass andere Transaktionskriterien festgelegt sein können. Weitere Angaben können beispielsweise ein Zeitstempel, eine Signatur des Absenders der Nachricht, eine ID der Nachricht und weitere Transaktionskriterien, wie eine Angabe über die gewünschte Erzeugungs- oder Verbrauchsart, Entfernung zur Entität, etc., sein.

Eine weitere Nachricht 454 kann eine Annahmenachricht 454 sein. Eine Annahmenachricht kann gleiche oder zumindest ähnliche Datenangaben wie eine Anfragenachricht aufweisen. Zusätzlich kann die Annahmenachricht 454 eine Bezugangabe auf eine vorherige Anfrage, wie die ID der Anfragenachricht, umfassen. Beispielsweise kann in Bezug auf eine Anfragenachricht in einer Annahmenachricht aufgelistet sein, dass eine bestimmte und gewünschte Menge an Versorgungsmedium für den zukünftigen Zeitraum zu dem Transaktionskriterium geliefert werden kann. Bei der Menge kann es sich um eine Teilmenge der angefragten Menge handeln. Bei der Zeitangabe kann es sich um eine Teilzeitangabe handeln. Ebenso kann ein geringeres/höheres Transaktionskriterium angegeben sein.

Falls eine Annahmenachricht nur eine Teilmenge der angefragten Menge, Teilzeitangabe und/oder ein geringeres/höheres/anderes Transaktionskriterium umfasst, kann die Annahmenachricht als Gegenangebotsnachricht bezeichnet werden. Diese kann von der ersten Entität durch eine Annahmenachricht angenommen werden. Basierend hierauf kann die Entität die Generierung einer Versorgungsmedium-Transaktions-Vereinbarung veranlassen.

Insbesondere kann es mehrere Anfragenachrichten und/oder Annahmenachrichten geben. Jede Entität kann Vorgaben geben, nach denen mindestens eine Versorgungsmedium-Transaktions-Vereinbarung generiert werden kann. In einem vorzugsweise automatischen, beispielsweise iterativen, Prozess kann vorzugsweise jeder Anfragenachricht eine möglichst optimal korrespondierende Annahmenachricht zugeordnet werden. Die Blockchain 424 kann ferner eingerichtet sein, basierend auf den Nachrichten und unter Bewirkung der Entitäten eine Versorgungsmedium-Transaktions-Vereinbarung 456 zu generieren.

Eine Versorgungsmedium-Transaktions-Vereinbarung 456 kann innerhalb eines Smart Contracts 456 in einem Block 448 gespeichert sein. Ein Smart-Contract kann Computerprogrammcode umfassen. In der Versorgungsmedium-Transaktion-Vereinbarung kann insbesondere der Austausch bzw. die Lieferung oder Abnahme einer bestimmten Menge des Versorgungsmediums für einen bestimmten Zeitraum und/oder einem Transaktionskriterium, wie einem bestimmten Preis, zwischen der ersten Entität und einer weiteren Entität vereinbart sein. Beispielsweise kann die erste Entität mit der weiteren Entität mittels der Blockchain die Generierung einer Vereinbarung bewirken, dass die erste Entität der weiteren Entität für einen Zeitraum Tₓ und einem Betrag X eine bestimmte Menge an elektrischer Leistung (X kW/h) über das Stromnetz liefert. Entsprechende Versorgungsmedium-Transaktions-Vereinbarungen können in anderen Versorgungssystemen generiert werden.

Zudem kann in einem Block 450 eine Transaktionskriterium-Transaktion 458 gespeichert sein, wie die Transaktion von einer zuvor vereinbarten Menge einer Cryptowährung nach der Erfüllung der Versorgungsmedium-Transaktions-Vereinbarung. Hierzu können auch die entsprechenden Zählerdaten 460 der Entitäten, die die Versorgungsmedium-Transaktions-Vereinbarung geschlossen hatten, in der Blockchain 424 gespeichert werden, um insbesondere eine Verifizierung durch das Peer-to-Peer-Netzwerk vorzunehmen, ob vereinbarungsgemäß die Versorgungsmediummenge geliefert und empfangen wurde. Bei den Zählerdaten handelt es sich insbesondere um die Versorgungsmediummengen, die tatsächlich von einer Zählervorrichtung einer Entität während der festgelegten Zeitdauer gemessen wurde.

Insbesondere ist die Peer-to-Peer-Anwendung 424 dazu eingerichtet, die gespeicherten Nachrichten in manipulationssicherer Weise zu speichern. Dies erfolgt im Wesentlichen dadurch, dass durch das gesamte Peer-to-Peer-Netzwerk zum Beispiel eine Versorgungsmedium-Transaktions-Vereinbarung durch die kumulierte Rechenleistung des gesamten Peer-to-Peer-Netzwerks verifiziert werden kann.

Vorzugsweise können zumindest die zuvor beschriebenen Nachrichten, wie die Versorgungsmedium-Transaktions-Vereinbarungen, in einem Block der Blockchain durch einen Merkle-Baum paarweise miteinander gehasht werden. Insbesondere kann nur der letzte Hashwert, der so genannte Root-Hash, als Prüfsumme in dem Header eines Blocks vermerkt werden. Dann kann der Block mit dem vorherigen Block verkettet werden. Das Verketten der Blöcke kann mithilfe dieses Root-Hashes durchgeführt werden. Jeder Block kann im Header den Hash des gesamten vorherigen Blockheaders umfassen. Dies erlaubt es, die Reihenfolge der Blöcke eindeutig festzulegen. Außerdem kann dadurch auch das nachträgliche Modifizieren vorangegangener Blöcke bzw. der in den vorherigen Blöcken gespeicherten Nachrichten (praktisch) ausgeschlossen werden, da insbesondere die Hashes aller nachfolgenden Blöcke in kurzer Zeit ebenfalls neu berechnet werden müssten.

In der Figur 5 ist eine schematische Ansicht eines weiteren Ausführungsbeispiels eines Systems 500, insbesondere eines elektrischen Versorgungssystems 500, abgebildet. Das stark vereinfacht dargestellte Versorgungssystem 500 umfasst vorliegend sieben Entitäten 504, 506, 564 bis 572. Sämtliche Entitäten 504, 506, 564 bis 572 sind mit einem Versorgungskanalnetz 502, insbesondere einem Stromnetz 502, zumindest verbindbar.

Wie ferner zu erkennen sind, bilden die Entitäten 504, 506, 564 bis 572 bzw. deren jeweilige (nicht dargestellte) Kommunikationsvorrichtungen ein Peer-to-Peer-Netzwerk 522, welches eine (nicht dargestellte) Peer-to-Peer-Anwendung, z.B. die Blockchain 424 gemäß Figur 4, bereitstellt.

Die erste Entität 504 kann ein Haushalt 504 sein, der eine Mehrzahl von elektrischen Verbrauchern umfasst. Die erste Entität 504 kann daher auch als elektrischer Verbraucher 504 bezeichnet werden. Die erste Entität 504 weist daher einen Bedarf an Versorgungsmedium auf und kann entsprechende Anfrage- und/oder Annahmenachrichten generieren sowie an das Peer-to-Peer-Netzwerk 522 übertragen. Die weitere Entität 506 kann ebenfalls ein Haushalt 506, insbesondere ein Prosumer 506, sein. Als Prosumer 506 kann die weitere Entität Leistung an das Stromnetz 502 abgeben als auch Leistung aus dem Stromnetz 502 beziehen. Der Prosumer kann entsprechende Anfrage- und/oder Annahmenachrichten generieren und an das an das Peer-to-Peer-Netzwerk 522 übertragen.

Die weitere Entität 564 kann ein dezentraler Erzeuger 564, wie eine KWK-Anlage 564, sein. Mit anderen Worten ist die Entität 564 eingerichtet, Leistung ins Stromnetz 502 zu speisen. Sie kann entsprechende Nachrichten generieren, wie auch die nachfolgenden Entitäten entsprechende Nachrichten generieren können. Darüber hinaus kann als Entität 566 ein elektrischer Speicher 566 vorhanden sein, wie eine Batterie 566. Der Speicher 566 kann insbesondere eingerichtet sein, aufgrund von Überleistung im Stromnetz 502 diese zwischenzuspeichern und bei einem Leistungsbedarf diese wieder abzugeben. Ferner kann eine Entität 568 eine elektrisch betriebene Maschine 568, also z.B. ein (smarter) elektrischer Verbraucher 568, wie ein IoT Gerät, sein. Bei der Entität 570 kann es sich beispielsweise um ein Unternehmen 570 mit einer Vielzahl von elektrischen Verbrauchern und/oder mit einem oder mehreren Erzeuger/n handeln. Schließlich ist als Entität 572 eine Ausgleichsentität 572 vorgesehen, die nachfolgend näher erläutert werden wird.

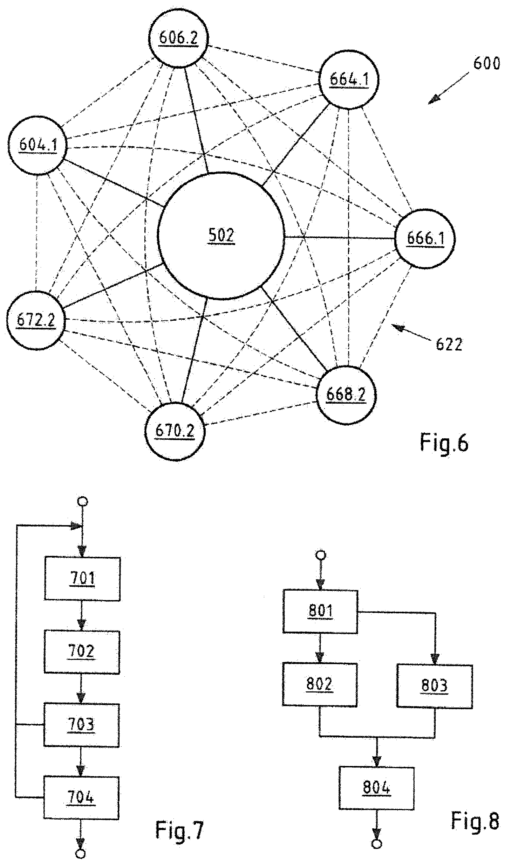

Die Figur 6 zeigt eine schematische Ansicht eines weiteren Ausführungsbeispiels eines Systems 600, insbesondere eines elektrischen Versorgungssystems 600. Nachfolgend werden lediglich die Unterschiede zu einem Versorgungsystem, wie es beispielhaft in der Figur 5 dargestellt ist, beschrieben. Es sei angemerkt, dass es sich bei den Entitäten 604.1 bis 672.2 um gleiche, ähnliche oder andere Entitäten als die zuvor beschriebenen Entitäten handeln kann.

Im Unterschied zum vorherigen Beispiel sind vorliegend zwei unterschiedliche Arten von Peers bzw. Knotenrechnern 604.1, 664.1, 666.1 bzw. 606.2, 668.2, 670.2 und 672.2 dargestellt. Sämtliche Peers 604.1 bis 672.2 sind von dem Peer-to-Peer-Netzwerk 622 umfasst. Beim vorliegenden Ausführungsbeispiel überprüft jedoch nur ein Teil der Peers 604.1 bis 672.2, vorliegend die Peers 604.1, 664.1, 666.1, die Validität der in der Peer-to-Peer-Anwendung gespeicherten Nachrichten, wie Versorgungsmedium-Transaktions-Vereinbarungen. Auch kann vorgesehen sein, dass nur ein Teil der Peers die gesamte Peer-to-Peer-Anwendung speichert und/oder nur ein Teil der Peers die Algorithmen der Smart Contracts ausführt. Da mit der Validierung ein erheblicher Rechenaufwand einhergehen kann, kann es aus Effizienzgründen von Vorteil sein, wenn nur ein Teil der Peers 604.1, 664.1, 666.1, insbesondere besonders leistungsstarke Peers 604.1, 664.1, 666.1, die Validierung vornehmen. Leistungsstark meint insbesondere eine hohe Rechenleistung. Mit anderen Worten wird vorliegend von einem validen Eintrag in die Peer-to-Peer-Anwendung, wie einer Blockchain, ausgegangen, wenn (nur) ein Teil der Peers 604.1, 664.1, 666.1 zu einem positiven Ergebnis gelangt ist. Es versteht sich, dass auch nur ein einzelner, insbesondere besonders leistungsstarker Peer, die Validierung durchführen kann.

Ebenso kann bei einer alternativen (nicht gezeigten) Ausführungsform vorgesehen sein, dass ein insbesondere großes Peer-to-Peer-Netzwerk in zwei oder mehr Cluster aufgeteilt sein kann. Bei einem entsprechenden Peer-to-Peer-Netzwerk kann beispielsweise eine Validierung nur von den Mitgliedern eines Clusters durchgeführt werden.

Nachfolgend werden mittels der Figuren 7 bis 10 die Funktionsweisen verschiedener Komponenten von beispielhaften Systemen gemäß der Erfindung näher erläutert.

Die Figur 7 zeigt ein Ablaufdiagramm eines Verfahrens, welches insbesondere von einer Peer-to-Peer-Anwendung, wie der Blockchain 424 gemäß der Figur 4, ausgeführt werden kann.

In einem ersten Schritt 701 empfängt die Peer-to-Peer-Anwendung eine Nachricht, die sich auf den Austausch eines Versorgungsmediums bezieht, von einer Entität.

Beispielhafte und nicht abschließende Nachrichten sind Anfrage- oder Annahmenachrichten, Versorgungsmedium-Transaktions-Vereinbarungen, Zählerdatennachrichten, Transaktionskriterium-Transaktionsnachrichten, etc. Diese werden anschließend von mindestens einem Teil der Peers eines Peer-to-Peer-Netzwerks auf Plausibilität überprüft, wie z.B. zuvor ausgeführt worden ist.

In einem nächsten Schritt 702 wird die empfangene Nachricht von der Peer-to-Peer-Anwendung gespeichert. Aufgrund der speziellen Konfigurierung der Peer-to-Peer-Anwendung und des Peer-to-Peer-Netzwerks kann insbesondere jeder Teilnehmer die Nachricht lesen. Dann kann das Peer-to-Peer-Netzwerk durch die kumulierte Rechenleistung des gesamten Peer-to-Peer-Netzwerks verifiziert werden (Schritt 703). Für den Fall, dass weitere Nachrichten in den Block schreibbar sind, wird mit dem Schritt 701 fortgefahren. Für den Fall, dass keine weiteren Nachrichten in den Block geschrieben werden können, wird mit Schritt 704 fortgefahren. In Schritt 704 können die Nachrichten in einem Block, wie die Versorgungsmedium-Transaktions-Vereinbarungen, durch einen Merkle-Baum paarweise miteinander gehasht werden, wie oben beschrieben. Dann kann mit Schritt 701 fortgefahren werden.

Die Figur 8 zeigt ein weiteres Ablaufdiagramm eines ersten Ausführungsbeispiels eines Verfahrens, welches insbesondere von einer Entität bzw. einer Kommunikationsvorrichtung einer Entität durchgeführt werden kann.

In einem ersten Schritt 801 kann ein Versorgungsmediumplan der Entität für einen zukünftigen Zeitraum bereitgestellt werden. Beispielsweise kann die Kommunikationsvorrichtung einen entsprechenden Versorgungsmediumplan erstellen oder diesen von einer anderen Vorrichtung der Entität, wie einer Hausautomationssteuerung eines Hausautomationssystems der Entität, erhalten.

Die Erstellung eines Versorgungsmediumplans kann auf historischen Daten, Nutzereingaben und/oder Prognosedaten, wie Wetterdaten, Marktdaten, persönlichen Daten, wie Kalenderdaten, beruhen. Beispielsweise kann/können von einem oder mehreren Stromzähler/n die erfassten Stromparameter über Kommunikationsverbindungen an die Kommunikationsvorrichtung übertragen werden. Die Kommunikationsvorrichtung, wie deren Verarbeitungseinrichtung, kann dazu eingerichtet sein, die empfangenen Stromparameter in einer Speichereinrichtung zu speichern. Die übertragenen Parameter können insbesondere mit einem Zeitstempel versehen werden. Beispielsweise können die erfassten Verbrauchs- und/oder Erzeugerparameter mit einem Datum und/oder Uhrzeit versehen werden. Hierdurch kann für vorherige Zeiträume der Verlauf des/der Energieverbrauchs/-erzeugung abgebildet werden. Dieser Verlauf kann dann zur Erstellung des Versorgungsmediumplans verwendet werden.

Insbesondere kann aus diesen historischen Daten und vorzugsweise zusätzlichen Prognosedaten, wie Wetterdaten, und/oder Nutzerangaben, wie Abwesenheitszeiten, der Versorgungsmediumplan für einen zukünftigen Zeitraum, wie der nächsten Woche, dem nächsten Tag, der nächsten Stunde, etc., erstellt werden. Bevorzugt kann jeweils am Vortag für den nächsten Tag, der in eine Mehrzahl von Subbereichen (z.B. 15 min Zeiträume, also 96 Subbereiche) eingeteilt werden kann, ein Versorgungsmediumplan erstellt werden.

Zusätzlich zu dem Versorgungsmediumplan kann insbesondere für jeden Subbereich mindestens ein Transaktionskriterium vorgegeben werden. Beispielsweise können pro Subbereich zwei oder mehr Transaktionskriterien vorgegeben sein, die zwischen einem Maximalkriterium und einem Minimalkriterium, wie einem maximalen Preis und einem minimalen Preis liegen können. Die Vorgabe eines Bereichs hat den Vorteil, dass flexibel und gleichzeitig optimal auf die Anfragenachrichten der anderen Entität reagiert werden kann. Das aus Sicht der Entität bestmögliche Angebot basierend auf den selbstgesetzten Kriterien kann insbesondere in einem automatischen, iterativen Prozess bestimmt und ausgewählt werden. Auch kann als Transaktionskriterium beispielsweise eine bevorzugte Erzeugerart, lokale Nähe zur Entität, etc. vorgegeben werden.

Abhängig von den vorgenannten Parametern kann eine Anfragenachricht, vorzugsweise für jeden Subbereich, von einer Kommunikationsvorrichtung generiert und an das Peer-to-Peer-Netzwerk in Schritt 802 übertragen werden. Alternativ oder zusätzlich kann in Schritt 803 die Entität bzw. deren Kommunikationsvorrichtung Anfragenachrichten in der Peer-to-Peer-Anwendung von anderen Entitäten erfassen/lesen und basierend auf den vorgenannten Parametern sowie den Parametern der gelesenen Nachricht Annahmenachrichten an das Peer-to-Peer-Netzwerk schicken.

In einem Schritt 804 kann dann von der Entität die Generierung einer Versorgungsmedium-Transaktions-Vereinbarung mit einer weiteren Entität mittels der Peer-to-Peer-Anwendung, insbesondere nach einer Einigung mit einer anderen Entität, bewirkt werden. Vorzugsweise kann an das Peer-to-Peer-Netzwerk eine entsprechende Nachricht von zumindest einer der Entitäten übertragen werden.

Zur Verifizierung von Nachrichten können öffentliche und/oder private Schlüssel von den Entitäten verwendet werden.

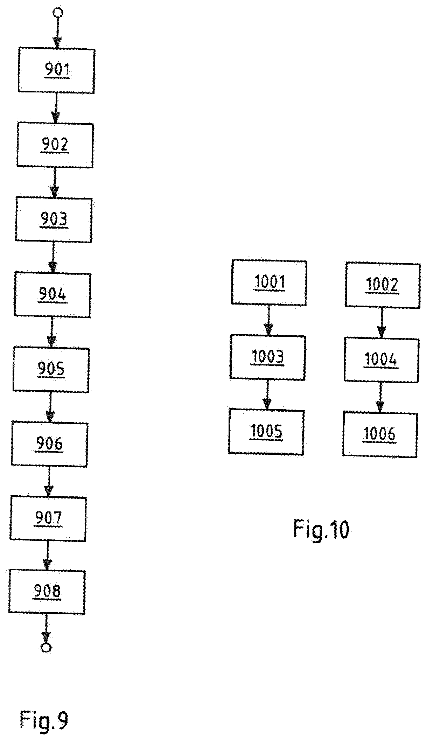

Figur 9 zeigt ein weiteres Diagramm eines weiteren Verfahrens gemäß der vorliegenden Erfindung. Das nachfolgende Verfahren wird beispielhaft anhand des Versorgungssystems 500 gemäß der Figur 5 beschrieben.

In einem Schritt 901 können vorzugsweise die Entitäten 504, 506, 564 bis 570 jeweils einen Versorgungsmediumplan und zugehörige Transaktionskriterien aufstellen. Dies kann entsprechend den obigen Ausführungen erfolgen.

In einem Schritt 902 kann dann von mindestens einer Entität die Generierung einer Versorgungsmedium-Transaktions-Vereinbarung bewirkt werden. Dem kann insbesondere der Austausch von Anfrage- und Annahmenachrichten der Entitäten vorausgegangen sein. Insbesondere kann mittels der Peer-to-Peer-Anwendung und dem Austausch von Nachrichten mit der Peer-to-Peer-Anwendung eine Mehrzahl von individuellen Versorgungsmedium-Transaktions-Vereinbarungen zwischen den Entitäten 504, 506, 564 bis 570 generiert werden. Es kann vorkommen, dass nach dem Schritt 902 Anfragen von Entitäten 504, 506, 564 bis 570 nicht erfüllt werden konnten. Beispielsweise kann bei mindestens einer Entität in einem oder mehreren Subbereich/en ein Bedarf an dem Versorgungsmedium bestehen. Alternativ oder zusätzlich kann bei mindestens einer Entität in einem oder mehreren (anderen) Subbereich/en ein Überschuss an generiertem Versorgungsmedium bestehen. Dies kann beispielsweise bei volatilen Erzeugern auftreten, wie Windkraftanlagen oder Photovoltaikanlagen.

In einem Schritt 903 kann daher vorgesehen sein, dass die mindestens eine Entität 504, 506, 564 bis 570, die noch mindestens eine zumindest nicht vollständig erfüllte Anfragenachricht offen hat, eine Versorgungsmedium-Transaktions-Vereinbarung mit der Ausgleichsentität 572 mittels der Peer-to-Peer-Anwendung generiert bzw. abschließt. Eine Ausgleichsentität 572 kann insbesondere eingerichtet sein, jederzeit eine fehlende Versorgungsmediummenge auszugleichen und/oder eine überschüssige Versorgungsmediummenge abzunehmen. Beispielsweise kann es sich bei der Ausgleichsentität 572 um ein Versorgungsunternehmen, wie ein Energieversorgungsunternehmen, handeln. Alternativ und bevorzugt kann es sich um eine dezentrale autonome Organisation (DAO) handeln. Im vorliegenden Ausführungsbeispiel kann es sich um ein elektrisches Energieversorgungsunternehmen mit einer Mehrzahl von beispielsweise konventionellen Kraftwerken und der Möglichkeit, Energie an Entitäten, die nicht Teil des Peer-to-Peer-Netzwerks sind, weiterzuleiten, handeln. Die Ausgleichsentität 572 stellt daher insbesondere ein sicheres und stabiles Betreiben des Stromnetzes sicher. Kritische Netzzustände können verhindert werden. Die Kapazität des Stromnetzes kann optimaler genutzt werden. Flexibilitäten können besser ausgenutzt werden.

Wie bereits beschrieben wurde, kann vorzugsweise am Vortag für den nachfolgenden Tag die Versorgungsmedium-Transaktions-Vereinbarungen geschlossen werden. Vorzugsweise kann jede Entität 504, 506, 564 bis 570 in einem Schritt 904 eine zeitlich nachgelagerte, erneute Überprüfung der eigenen vorgenommenen Prognose, also des Versorgungsmediumplans, insbesondere einzelner Subbereiche, durchführen. Beispielsweise kann vorgesehen sein, dass zu mindestens einem individuell bestimmbaren Zeitpunkt vor einem Subbereich vorzugsweise jede Entität 504, 506, 564 bis 570 überprüft, ob der/das für den Subbereich geplante Bedarf/Angebot tatsächlich erreicht werden wird. Es versteht sich, dass nach der Generierung einer Versorgungsmedium-Transaktions-Vereinbarung bis zum vereinbarten Startzeitpunkt eine nahezu kontinuierliche Überprüfung erfolgen kann.

Wird eine Abweichung zwischen geplanter Versorgungsmediummenge und aktuell prognostizierter Versorgungsmediummenge für einen bestimmten Subbereich festgestellt, beispielsweise aufgrund von Wetteränderungen und/oder Benutzeraktionen, kann in Schritt 905 die Entität 504, 506, 564 bis 570 eine weitere Versorgungsmedium-Transaktions-Vereinbarung mit einer weiteren Entität 504, 506, 564 bis 570 mittels der Peer-to-Peer-Anwendung generieren. Dies erfolgt insbesondere aufgrund der detektierten Abweichung. Wenn beispielsweise ein Erzeuger und ein Verbraucher korrespondierende Abweichungen detektieren, können diese Entitäten das Generieren einer entsprechenden Versorgungsmedium-Transaktions-Vereinbarung bewirken. Hierdurch können die Versorgungssicherheit und/oder Netzstabilität dezentral sichergestellt und insbesondere die Nutzung von dezentralen Anlagen und des Netzes dezentral optimiert werden.

Hierbei sei angemerkt, dass aufgrund der erfindungsgemäßen Konfigurierung der Peer-to-Peer-Anwendung, wie einer Blockchain, eine nachträgliche Änderung einer Versorgungsmedium-Transaktions-Vereinbarung nicht möglich sein kann, sondern eine weitere Versorgungsmedium-Transaktions-Vereinbarung generiert werden muss, falls festgestellt wird, dass eine vorherige Versorgungsmedium-Transaktions-Vereinbarung zumindest nicht vollständig erfüllt werden kann.

Für den Fall, dass in Schritt 905 Anfragen von Entitäten 504, 506, 564 bis 570 nicht erfüllt werden konnten, kann/können in Schritt 906 entsprechend dem Schritt 903 Versorgungsmedium-Transaktions-Vereinbarung/en generiert werden.

Im nächsten Schritt 907 kann während des jeweiligen in einer Versorgungsmedium-Transaktions-Vereinbarung festgesetzten Subbereichs vorzugsweise jede Entität 504, 506, 564 bis 570 (kontinuierlich) prüfen, ob die (aktuell gemessenen) Ist-Werte des Versorgungsmedium mit der in der Versorgungsmedium-Transaktions-Vereinbarung festgesetzten Versorgungsmediummenge übereinstimmen. Wird eine Abweichung festgestellt, beispielsweise aufgrund von Wetter- und/oder Marktänderungen und/oder Benutzeraktionen, kann diese Abweichung in Schritt 908 durch (unmittelbare) Generierung von Versorgungsmedium-Transaktions-Vereinbarungen mit weiteren Entitäten, die ebenfalls eine aktuelle Abweichung detektiert haben, ausgeglichen und/oder durch die Ausgleichsentität 572 unmittelbar ausgeglichen werden. Ein sicheres und stabiles Betreiben eines Versorgungsnetzes kann dezentral erzielt werden.

Figur 10 zeigt ein weiteres Ausführungsbeispiel eines Verfahrens gemäß der vorliegenden Erfindung. Insbesondere kann das Verfahren durchgeführt werden, wenn der Austausch des Versorgungsmediums entsprechend einer Versorgungsmedium-Transaktions-Vereinbarung bereits erfolgt ist.

Vorzugsweise kann einer ersten Entität, insbesondere der Kommunikationsvorrichtung der ersten Entität, in einem ersten Schritt 1001 eine während der Zeitdauer Tₓ empfangene Energiemenge bereitgestellt werden. Vorzugsweise kann die Energiemenge von einer Zählervorrichtung zur Verfügung gestellt werden. Die Zählervorrichtung kann die aus dem Stromnetz bezogene elektrische Leistung (X kW/h) zumindest während der Zeitdauer Tₓ messen. Vorzugsweise parallel hierzu kann einer weiteren Entität, insbesondere der Kommunikationsvorrichtung der weiteren Entität, in einem Schritt 1002 eine während der Zeitdauer Tₓ gelieferte Energiemenge bereitgestellt werden. Beispielsweise erfolgt auch dies mittels einer Zählervorrichtung, wie zuvor beschrieben.

In den Schritten 1003 und 1004 kann jeweils mittels der Peer-to-Peer-Anwendung überprüft werden, ob die Versorgungsmediummenge entsprechend der Versorgungsmedium-Transaktions-Vereinbarung zwischen der ersten und der weiteren Entität ausgetauscht wurde. Beispielsweise können die bereitgestellten erfassten Energiemengen von der jeweiligen Entität an die Peer-to-Peer-Anwendung gesendet werden. Die Überprüfung kann dann das gesamte Peer-to-Peer-Netzwerk übernehmen.

Abhängig von dem Überprüfungsergebnis kann die erste Entität den gesamten (oder nur einen Teil) des vereinbarten Preises in Form von Cryptogeld in Schritt 1005 überweisen. In Schritt 1006 empfängt die weitere Entität das überwiesene Cryptogeld. Auch die Schritte 1005 und 1006 werden entsprechend den vorherigen Ausführungen durch die Peer-to-Peer-Anwendung in insbesondere manipulationssicherer Weise durchgeführt. Insbesondere kann eine zuvor beschriebene Plausibilitätsprüfung von zumindest einem Teil der Peers durchgeführt werden.

Vorzugsweise kann das gesamte Peer-to-Peer-Netzwerk durch kumulierte Rechenleistung überprüfen, ob die Energiemengen korrekt sind und/oder die Überweisung korrekt durchgeführt worden ist, also beispielsweise die erste Entität tatsächlich Besitzer des Cryptogeldes war.

Auch kann vorgesehen sein, dass ein Netzbetreiber basierend auf den Zählerdaten nachträglich, beispielsweise einmal im Monat, Woche, etc., über tatsächlich erfasste Zählwerte informiert und daraus eine Korrektur der tatsächlich ausgetauschten Versorgungsmediummenge gegenüber den in der Peer-to-Peer Anwendung erfassten Mengen durchführt. Auch diese Korrektur kann mittels der Peer-to-Peer-Anwendung erfolgen und beispielsweise zwischen den Entitäten verrechnet werden.

## Patentansprüche

1. Versorgungssystem (200, 500, 600), umfassend:
- eine erste mit mindestens einem physikalischen Versorgungskanalnetz (202, 302, 502, 602) verbindbare Entität (204, 304, 504, 604.1),
- mindestens eine weitere mit dem physikalischen Versorgungskanalnetz (202, 302, 502, 602) verbindbare Entität (206, 506, 564, 566, 568, 570, 572, 606.2, 664.1, 666.1, 668.2, 670.2, 672.2),
- mindestens ein Peer-to-Peer-Netzwerk (222, 522, 622) eingerichtet zum Bereitstellen einer Peer-to-Peer-Anwendung (224, 424),
- wobei die weitere Entität (206, 506, 564, 566, 568, 570, 572, 606.2, 664.1, 666.1, 668.2, 670.2, 672.2) mindestens eine mit dem Peer-to-Peer-Netzwerk (222, 522, 622) verbindbare Kommunikationsvorrichtung (220.2) umfasst,
- wobei die erste Entität (204, 304, 504, 604.1) mindestens eine weitere mit dem Peer-to-Peer-Netzwerk (222, 522, 622) verbindbare Kommunikationsvorrichtung (220.1, 320) umfasst, und
- wobei mindestens eine der Kommunikationsvorrichtungen (220.1, 220.2, 320) eingerichtet ist, zumindest eine Generierung einer Versorgungsmedium-Transaktions-Vereinbarung, umfassend eine auszutauschende Versorgungsmediummenge, über den physikalischen Austausch eines Versorgungsmediums zwischen der ersten Entität (204, 304, 504, 604.1) und der weiteren Entität (206, 506, 564, 566, 568, 570, 572, 606.2, 664.1, 666.1, 668.2, 670.2, 672.2) mittels der Peer-to-Peer-Anwendung (224, 424) durch Senden einer Nachricht, umfassend Instruktion zum Generieren der Versorgungsmedium-Transaktions-Vereinbarung, zu bewirken,
- wobei mindestens eine der Kommunikationsvorrichtungen (220.1, 220.2, 320) eingerichtet ist, basierend auf einem für die diese Kommunikationseinrichtung umfassende Entität (204, 304, 504, 604.1, 206, 506, 564, 566, 568, 570, 572, 606.2, 664.1, 666.1, 668.2, 670.2, 672.2) erstellten Versorgungsmediumplan mindestens eine Anfragenachricht, umfassend eine Versorgungsmediummengenangabe, einen Zeitraum und/oder mindestens ein Transaktionskriterium, und/oder mindestens eine Annahmenachricht, umfassend eine Versorgungsmediummengenangabe, einen Zeitraum und/oder mindestens ein Transaktionskriterium, zu generieren, und
- mindestens eine Zählervorrichtung (330), eingerichtet zum Erfassen der über einen Anschluss (208, 308) einer Entität (204, 304, 504, 604.1, 206, 506, 564, 566, 568, 570, 572, 606.2, 664.1, 666.1, 668.2, 670.2, 672.2) mit dem physikalischen Versorgungskanalnetz (202, 302, 502, 602) übertragenen Versorgungsmediummenge, wobei ein Vergleich der erfassten Versorgungsmediummenge mit der in der Versorgungsmedium-Transaktions-Vereinbarung festgelegten Versorgungsmediummenge durchgeführt wird, und
wobei die Kommunikationsvorrichtung (220.1, 220.2, 320) eingerichtet ist, bei Detektion einer Abweichung durch die Entität (204, 304, 504, 604.1, 206, 506, 564, 566, 568, 570, 572, 606.2, 664.1, 666.1, 668.2, 670.2, 672.2) eine Generierung einer weiteren Versorgungsmedium-Transaktions-Vereinbarung über die festgestellte Abweichung mit einer weiteren Entität zu bewirken.

2. System (200, 500, 600) nach Anspruch 1, **dadurch gekennzeichnet, dass**
- die Peer-to-Peer-Anwendung (224, 424) ein dezentrales Register (224, 424) ist, und
- das dezentrale Register (224, 424) zumindest einem Teil der Teilnehmer des Peer-to-Peer-Netzwerks (222, 522, 622) lesbar ist.

3. System (200, 500, 600) nach Anspruch 1 oder 2, **dadurch gekennzeichnet, dass** jeder Rechner des Peer-to-Peer-Netzwerks (222, 522, 622) die Peer-to-Peer-Anwendung (224, 424) aufweist.

4. System (200, 500, 600) nach einem der vorherigen Ansprüche, **dadurch gekennzeichnet, dass** die Peer-to-Peer-Anwendung (224, 424) Verschlüsslungsmittel und/oder Signaturmittel und/oder Verifikationsmittel umfasst, wobei mindestens eines der Verschlüsslungsmittel und/oder Signaturmittel und/oder Verifikationsmittel eingerichtet ist zum Speichern von zumindest jeder generierten Versorgungsmedium-Transaktions-Vereinbarung.

5. System (200, 500, 600) nach einem der vorherigen Ansprüche, **dadurch gekennzeichnet, dass** die Peer-to-Peer-Anwendung (224, 424) eine Blockchain (224, 424) umfassend mindestens zwei miteinander verknüpfte Blöcke (446, 448, 450) ist.

6. System (200, 500, 600) nach einem der vorherigen Ansprüche, **dadurch gekennzeichnet, dass**
- die Kommunikationsvorrichtung (220.1, 220.2, 320) eingerichtet ist, eine erfasste Versorgungsmediummenge an die Peer-to-Peer-Anwendung (224, 424) zu übertragen.

7. System (200, 500,600) nach Anspruch 6, **dadurch gekennzeichnet, dass** die Kommunikationsvorrichtung (220.1, 220.2, 320) eingerichtet ist, eine Generierung einer Transaktionskriterium-Transaktion basierend zumindest auf einem in einer Versorgungsmedium-Transaktions-Vereinbarung festgelegten Transaktionskriterium und der erfassten Versorgungsmediummenge zu bewirken.

8. Verfahren zum Betreiben eines Versorgungssystems (200, 500, 600), insbesondere eines Versorgungssystems (200, 500, 600) nach einem der vorherigen Ansprüche, wobei das Versorgungssystem (200, 500, 600) eine erste mit mindestens einem physikalischen Versorgungskanalnetz (202, 302, 502, 602) verbindbare Entität (204, 304, 504,604.1), mindestens eine weitere mit dem physikalischen Versorgungskanalnetz (202, 302, 502, 602) verbindbare Entität (206, 506, 564, 566, 568, 570, 572, 606.2, 664.1, 666.1, 668.2, 670.2, 672.2), und mindestens ein Peer-to-Peer-Netzwerk (222, 522, 622) eingerichtet zum Bereitstellen einer Peer-to-Peer-Anwendung (224, 424) umfasst, umfassend:
- Bewirken einer Generierung von mindestens einer Versorgungsmedium-Transaktions-Vereinbarung, umfassend eine auszutauschende Versorgungsmediummenge, über den physikalischen Austausch eines Versorgungsmediums zwischen der ersten Entität (204, 304, 504, 604.1) und der weiteren Entität (206, 506, 564, 566, 568, 570, 572, 606.2, 664.1, 666.1, 668.2, 670.2, 672.2) mittels der Peer-to-Peer-Anwendung (224, 424) durch Senden einer Nachricht umfassend Instruktion zum Generieren der Versorgungsmedium-Transaktions-Vereinbarung,
- wobei basierend auf einem für mindestens eine der Entitäten (204, 304, 504, 604.1, 206, 506, 564, 566, 568, 570, 572, 606.2, 664.1, 666.1, 668.2, 670.2, 672.2) erstellten Versorgungsmediumplan mindestens eine Anfragenachricht, umfassend eine Versorgungsmediummengenangabe, einen Zeitraum und/oder mindestens ein Transaktionskriterium, und/oder mindestens eine Annahmenachricht, umfassend eine Versorgungsmediummengenangabe, einen Zeitraum und/oder mindestens ein Transaktionskriterium, generiert wird,
- Erfassen der über einen Anschluss (208, 308) einer Entität (204, 304, 504, 604.1, 206, 506, 564, 566, 568, 570, 572, 606.2, 664.1, 666.1, 668.2, 670.2, 672.2) mit dem physikalischen Versorgungskanalnetz (202, 302, 502, 602) übertragenen Versorgungsmediummenge, wobei ein Vergleich der erfassten Versorgungsmediummenge mit der in der Versorgungsmedium-Transaktions-Vereinbarung festgelegten Versorgungsmediummenge durchgeführt wird, und
Bewirken einer Generierung einer weiteren Versorgungsmedium-Transaktions-Vereinbarung über die festgestellte Abweichung mit einer weiteren Entität bei Detektion einer Abweichung durch die Entität (204, 304, 504, 604.1, 206, 506, 564, 566, 568, 570, 572, 606.2, 664.1, 666.1, 668.2, 670.2, 672.2).

9. Kommunikationsvorrichtung (220.1, 220.2, 320) für eine erste mit mindestens einem physikalischen Versorgungskanalnetz (202, 302, 502, 602) verbindbare Entität (204, 304, 504, 604.1), umfassend:
- mindestens ein Kommunikationsmodul (342) eingerichtet zum Kommunizieren mit einem eine Peer-to-Peer-Anwendung (224, 424) bereitstellenden Peer-to-Peer-Netzwerk (222, 522, 622),
- wobei das Kommunikationsmodul (342) zum Bewirken einer Generierung einer Versorgungsmedium-Transaktions-Vereinbarung, umfassend eine auszutauschende Versorgungsmediummenge, über den physikalischen Austausch eines Versorgungsmediums zwischen der ersten Entität (204, 304, 504, 604.1) und einer weiteren Entität (206, 506, 564, 566, 568, 570, 572, 606.2, 664.1, 666.1, 668.2, 670.2, 672.2) mittels der Peer-to-Peer-Anwendung (224, 424) durch Senden einer Nachricht umfassend Instruktion zum Generieren der Versorgungsmedium-Transaktions-Vereinbarung eingerichtet ist,
- wobei die Kommunikationsvorrichtung (220.1, 220.2, 320) eingerichtet ist, basierend auf einem für die Entität (204, 304, 504, 604.1, 206, 506, 564, 566, 568, 570, 572, 606.2, 664.1, 666.1, 668.2, 670.2, 672.2) der Kommunikationsvorrichtung (220.1, 220.2, 320) erstellten Versorgungsmediumplan mindestens eine Anfragenachricht, umfassend eine Versorgungsmediummengenangabe, einen Zeitraum und/oder mindestens ein Transaktionskriterium, und/oder mindestens eine Annahmenachricht, umfassend eine Versorgungsmediummengenangabe, einen Zeitraum und/oder mindestens ein Transaktionskriterium, zu generieren,
- wobei die Kommunikationsvorrichtung eingerichtet ist zum Bewirken einer Generierung einer weiteren Versorgungsmedium-Transaktions-Vereinbarung über eine durch einen Vergleich zwischen der in der Versorgungsmedium-Transaktions-Vereinbarung festgelegten Versorgungsmediummenge und der von einer Zählervorrichtung (330) erfassten, über einen Anschluss (208, 308) einer Entität (204, 304, 504, 604.1, 206, 506, 564, 566, 568, 570, 572, 606.2, 664.1, 666.1, 668.2, 670.2, 672.2) mit dem physikalischen Versorgungskanalnetz (202, 302, 502, 602) übertragenen, Versorgungsmediummenge bestimmten Abweichung bei Detektion der Abweichung durch die Entität (204, 304, 504, 604.1, 206, 506, 564, 566, 568, 570, 572, 606.2, 664.1, 666.1, 668.2, 670.2, 672.2).

10. Verfahren zum Betreiben einer Kommunikationsvorrichtung (220.1, 220.2, 320) für eine erste mit mindestens einem physikalischen Versorgungskanalnetz (202, 302, 502, 602) verbindbare Entität (204, 304, 504, 604.1), umfassend:
- Bewirken einer Generierung einer Versorgungsmedium-Transaktions-Vereinbarung über den physikalischen Austausch eines Versorgungsmediums zwischen der ersten Entität (204, 304, 504, 604.1) und einer weiteren Entität (206, 506, 564, 566, 568, 570, 572, 606.2, 664.1, 666.1, 668.2, 670.2, 672.2) mittels einer Peer-to-Peer-Anwendung (224, 424) durch Senden einer Nachricht umfassend Instruktion zum Generieren der Versorgungsmedium-Transaktions-Vereinbarung,
- Generieren mindestens einer Anfragenachricht, umfassend eine Versorgungsmediummengenangabe, einen Zeitraum und/oder mindestens ein Transaktionskriterium, und/oder mindestens einer Annahmenachricht, umfassend eine Versorgungsmediummengenangabe, einen Zeitraum und/oder mindestens ein Transaktionskriterium, basierend auf einem für die Entität (204, 304, 504, 604.1, 206, 506, 564, 566, 568, 570, 572, 606.2, 664.1, 666.1, 668.2, 670.2, 672.2) der Kommunikationsvorrichtung (220.1, 220.2, 320) erstellten Versorgungsmediumplan, und
- Bewirken einer Generierung einer weiteren Versorgungsmedium-Transaktions-Vereinbarung über eine durch einen Vergleich zwischen der in der Versorgungsmedium-Transaktions-Vereinbarung festgelegten Versorgungsmediummenge und der von einer Zählervorrichtung (330) erfassten, über einen Anschluss (208, 308) einer Entität (204, 304, 504, 604.1, 206, 506, 564, 566, 568, 570, 572, 606.2, 664.1, 666.1,668.2, 670.2, 672.2) mit dem physikalischen Versorgungskanalnetz (202, 302, 502, 602) übertragenen, Versorgungsmediummenge bestimmten Abweichung bei Detektion der Abweichung durch die Entität (204, 304, 504, 604.1, 206, 506, 564, 566, 568, 570, 572, 606.2, 664.1, 666.1, 668.2, 670.2, 672.2)..

11. Peer-to-Peer-Anwendung (224, 424), wobei die Peer-to-Peer-Anwendung (224, 424) durch Software gebildet ist, umfassend:
- Mittel zum Empfangen von mindestens einer Nachricht, umfassend Instruktion zum Generieren der Versorgungsmedium-Transaktions-Vereinbarung, von einer Kommunikationsvorrichtung (220.1, 220.2, 320) einer mit einem physikalischen Versorgungskanalnetz (202, 302, 502, 602) verbindbaren ersten Entität (204, 304, 504, 604.1), wobei durch die Nachricht von der ersten Entität (204, 304, 504, 604.1) die Generierung einer Versorgungsmedium-Transaktions-Vereinbarung über den physikalischen Austausch eines Versorgungsmediums zwischen der ersten Entität (204, 304, 504, 604.1) und einer weiteren Entität (206, 506, 564, 566, 568, 570, 572, 606.2, 664.1, 666.1, 668.2, 670.2, 672.2) bewirkt werden kann, und
- Mittel zum Generieren der Versorgungsmedium-Transaktions-Vereinbarung nach Empfang der Nachricht,
- wobei basierend auf einem für mindestens eine der Entitäten (204, 304, 504, 604.1, 206, 506, 564, 566, 568, 570, 572, 606.2, 664.1, 666.1, 668.2, 670.2, 672.2) erstellten Versorgungsmediumplan mindestens eine Anfragenachricht, umfassend eine Versorgungsmediummengenangabe, einen Zeitraum und/oder mindestens ein Transaktionskriterium, und/oder mindestens eine Annahmenachricht, umfassend eine Versorgungsmediummengenangabe, einen Zeitraum und/oder mindestens ein Transaktionskriterium, empfangen wird,
- wobei eine Generierung einer weiteren Versorgungsmedium-Transaktions-Vereinbarung über eine durch einen Vergleich zwischen der in der Versorgungsmedium-Transaktions-Vereinbarung festgelegten Versorgungsmediummenge und der von einer Zählervorrichtung (330) erfassten, über einen Anschluss (208, 308) einer Entität (204, 304, 504, 604.1, 206, 506, 564, 566, 568, 570, 572, 606.2, 664.1, 666.1, 668.2, 670.2, 672.2) mit dem physikalischen Versorgungskanalnetz (202, 302, 502, 602) übertragenen, Versorgungsmediummenge bestimmten Abweichung bei Detektion der Abweichung durch die Entität (204, 304, 504, 604.1, 206, 506, 564, 566, 568, 570, 572, 606.2, 664.1, 666.1, 668.2, 670.2, 672.2) erfolgt.

12. Verfahren zum Betreiben einer Peer-to-Peer-Anwendung (224, 424), umfassend:
- Empfangen von mindestens einer Nachricht, umfassend Instruktion zum Generieren der Versorgungsmedium-Transaktions-Vereinbarung, von einer Kommunikationsvorrichtung (220.1, 220.2, 320) einer mit einem physikalischen Versorgungskanalnetz (202, 302, 502,602) verbindbaren ersten Entität (204, 304, 504, 604.1), wobei durch die Nachricht von der ersten Entität (204, 304, 504, 604.1) die Generierung einer Versorgungsmedium-Transaktions-Vereinbarung über den physikalischen Austausch eines Versorgungsmediums zwischen der ersten Entität (204, 304, 504,604.1) und einer weiteren Entität (206, 506, 564, 566, 568, 570, 572, 606.2, 664.1, 666.1, 668.2, 670.2, 672.2) bewirkt werden kann, und
- Generieren der Versorgungsmedium-Transaktions-Vereinbarung nach Empfang der Nachricht,
- wobei basierend auf einem für mindestens eine der Entitäten (204, 304, 504, 604.1, 206, 506, 564, 566, 568, 570, 572, 606.2, 664.1, 666.1, 668.2, 670.2, 672.2) erstellten Versorgungsmediumplan mindestens eine Anfragenachricht, umfassend eine Versorgungsmediummengenangabe, einen Zeitraum und/oder mindestens ein Transaktionskriterium, und/oder mindestens eine Annahmenachricht, umfassend eine Versorgungsmediummengenangabe, einen Zeitraum und/oder mindestens ein Transaktionskriterium, empfangen wird,
- Generieren einer weiteren Versorgungsmedium-Transaktions-Vereinbarung über eine durch einen Vergleich zwischen der in der Versorgungsmedium-Transaktions-Vereinbarung festgelegten Versorgungsmediummenge und der von einer Zählervorrichtung (330) erfassten, über einen Anschluss (208, 308) einer Entität (204, 304, 504, 604.1, 206, 506, 564, 566, 568, 570, 572, 606.2, 664.1, 666.1, 668.2, 670.2, 672.2) mit dem physikalischen Versorgungskanalnetz (202, 302, 502, 602) übertragenen, Versorgungsmediummenge bestimmten Abweichung bei Detektion der Abweichung durch die Entität (204, 304, 504, 604.1, 206, 506, 564, 566, 568, 570, 572, 606.2, 664.1, 666.1, 668.2, 670.2, 672.2) bewirkt wird.

## Claims

1. Supply system (200, 500, 600), comprising:
- a first entity (204, 304, 504, 604.1) connectable to at least one physical supply channel network (202, 302, 502, 602),
- at least one further entity (206, 506, 564, 566, 568, 570, 572, 606.2, 664.1, 666.1, 668.2, 670.2, 672.2) connectable to the physical supply channel network (202, 302, 502, 602),
- at least one peer-to-peer network (222, 522, 622) configured to provide a peer-to-peer application (224, 424)
- wherein the further entity (206, 506, 564, 566, 568, 570, 572, 606.2, 664.1, 666.1, 668.2, 670.2, 672.2) comprises at least one communication device (220.2) connectable to the peer-to-peer network (222, 522, 622),
- wherein the first entity (204, 304, 504, 604.1) comprises at least one further communication device (220.1, 320) connectable to the peer-to-peer network (222, 522, 622), and
- wherein at least one of the communication devices (220.1, 220.2, 320) is configured to cause at least a generation of a supply medium transaction agreement, comprising a supply medium quantity to be exchanged, about the physical exchange of a supply medium between the first entity (204, 304, 504, 604.1) and the further entity (206, 506, 564, 566, 568, 570, 572, 606.2, 664.1, 666.1, 668.2, 670.2, 672.2) by means of the peer-to-peer application (224, 424) by sending a message, comprising instructions for generating the supply medium transaction agreement,
- wherein at least one of said communication devices (220.1, 220.2, 320) is configured, based on a supply medium plan created for the entity (204, 304, 504, 604.1, 206, 506, 564, 566, 568, 570, 572, 606.2, 664.1, 666.1, 668.2, 670.2, 672) comprising said communication device, to generate at least one request message, comprising a supply medium quantity specification, a time period and/or at least one transaction criterion, and/or at least one acceptance message, comprising a supply medium quantity specification, a time period and/or at least one transaction criterion, and
- at least one meter device (330), configured to detect the supply medium quantity transmitted via a port (208, 308) of an entity (204, 304, 504, 604.1, 206, 506, 564, 566, 568, 570, 572, 606.2, 664.1, 666.1, 668.2, 670.2, 672. 2) with the physical supply channel network (202, 302, 502, 602), wherein a comparison of the detected supply medium quantity with the supply medium quantity defined in the supply medium transaction agreement is carried out, and
- wherein the communication device (220.1, 220.2, 320) is configured, upon detection of a deviation by the entity (204, 304, 504, 604.1, 206, 506, 564, 566, 568, 570, 572, 606.2, 664.1, 666.1, 668.2, 670.2, 672.2), to cause a generation of a further supply medium transaction agreement on the detected deviation with a further entity.

2. System (200, 500, 600) according to claim 1, **characterized in that**
- the peer-to-peer application (224, 424) is a decentralized register (224, 424), and
- the decentralized register (224, 424) is readable by at least a part of the participants of the peer-to-peer network (222, 522, 622).

3. System (200, 500, 600) according to claim 1 or 2, **characterized in that** each computer of the peer-to-peer network (222, 522, 622) comprises the peer-to-peer application (224, 424).

4. System (200, 500, 600) according to any of the previous claims, **characterized in that** the peer-to-peer application (224, 424) comprises encryption means and/or signature means and/or verification means, wherein at least one of the encryption means and/or signature means and/or verification means is configured to store at least each generated supply medium transaction agreement.

5. System (200, 500, 600) according to any of the previous claims, **characterized in that** the peer-to-peer application (224, 424) is a block chain (224, 424) comprising at least two blocks (446, 448, 450) connected to each other.

6. System (200, 500, 600) according to any of the previous claims, **characterized in that**
- the communication device (220.1, 220.2, 320) is configured to transmit a detected supply medium quantity to the peer-to-peer application (224, 424).

7. System (200, 500, 600) according to claim 6, **characterized in that** the communication device (220.1, 220.2, 320) is configured to cause a generation of a transaction criterion transaction based at least on a transaction criterion defined in a supply medium transaction agreement and the detected supply medium quantity.

8. Method for operating a supply system (200, 500, 600), in particular, a supply system (200, 500, 600) according to one of the previous claims, wherein the supply system (200, 500, 600) comprises a first entity (204, 304, 504, 604) connectable to at least one physical supply channel network (202, 302, 502, 602). 1), at least one further entity (206, 506, 564, 566, 568, 570, 572, 606.2, 664.1, 666.1, 668.2, 670.2, 672.2) connectable to the physical supply channel network (202, 302, 502, 602), and at least one peer-to-peer network (222, 522, 622) configured to provide a peer-to-peer application (224, 424), comprising:
- causing a generation of at least one supply medium transaction agreement, comprising a supply medium quantity to be exchanged, about a physical exchange of a supply medium between the first entity (204, 304, 504, 604.1) and the further entity (206, 506, 564, 566, 568, 570, 572, 606.2, 664.1, 666.1, 668.2, 670.2, 672.2) by means of the peer-to-peer application (224, 424) by sending a message, comprising instructions for generating the supply medium transaction agreement,
- wherein, based on a supply medium plan created for at least one of the entities (204, 304, 504, 604.1, 206, 506, 564, 566, 568, 570, 572, 606.2, 664.1, 666.1, 668.2, 670.2, 672.2), at least one request message, comprising a supply medium quantity specification, a time period and/or at least one transaction criterion, and/or at least one acceptance message, comprising a supply medium quantity specification, a time period and/or at least one transaction criterion, is generated,
- detecting the supply medium quantity transmitted via a port (208, 308) of an entity (204, 304, 504, 604.1, 206, 506, 564, 566, 568, 568.1, 570, 572, 606.2, 664.1, 666.1, 668.2, 670.2, 672. 2) with the physical supply channel network (202, 302, 502, 602), wherein a comparison of the detected supply medium quantity with the supply medium quantity defined in the supply medium transaction agreement is carried out, and
causing a generation of a further supply medium transaction agreement, upon detection of a deviation by the entity (204, 304, 504, 604.1, 206, 506, 564, 566, 568, 570, 572, 606.2, 664.1, 666.1, 668.2, 670.2, 672.2), about the detected deviation with a further entity.

9. Communication device (220.1, 220.2, 320) for a first entity (204, 304, 504, 604.1) connectable to at least one physical supply channel network (202, 302, 502, 602), comprising:
- at least one communication module (342) configured to communicate with a peer-to-peer network (222, 522, 622) providing a peer-to-peer application (224, 424),
- wherein the communication module (342) is configured to cause a generation of a supply medium transaction agreement, comprising a supply medium quantity to be exchanged, about the physical exchange of a supply medium between the first entity (204, 304, 504, 604.1) and a further entity (206, 506, 564, 566, 568, 570, 572, 606.2, 664.1, 666.1, 668.2, 670.2, 672.2) by means of the peer-to-peer application (224, 424) by sending a message, comprising instructions for generating the supply medium transaction agreement,
- wherein said communication device (220.1, 220.2, 320) is configured, based on a supply medium plan created for the entity (204, 304, 504, 604.1, 206, 506, 564, 566, 568, 570, 572, 606.2, 664.1, 666.1, 668.2, 670.2, 672.2) of said communication device (220.1, 220.2, 320), to generate at least one request message, comprising a supply medium quantity specification, a time period and/or at least one transaction criterion, and/or at least one acceptance message, comprising a supply medium quantity specification, a time period and/or at least one transaction criterion,
- wherein the communication device is configured to cause a generation of a further supply medium transaction agreement about a supply medium quantity determined by a comparison between the supply medium quantity defined in the supply medium transaction agreement and the supply medium quantity, detected by a meter device (330), transmitted via a port (208, 308) of an entity (204, 304, 504, 604.1, 206, 506, 564, 566, 568, 570, 572, 606.2, 664.1, 666.1, 668.2, 670.2, 672.2) with the physical supply channel network (202, 302, 502, 602), upon detection of the deviation by the entity (204, 304, 504, 604. 1, 206, 506, 564, 566, 568, 570, 572, 606.2, 664.1, 666.1, 668.2, 670.2, 672.2).

10. Method for operating a communication device (220.1, 220.2, 320) for a first entity (204, 304, 504, 604.1) connectable to at least one physical supply channel network (202, 302, 502, 602), comprising:
- causing a generation of a supply medium transaction agreement about the physical exchange of a supply medium between the first entity (204, 304, 504, 604.1) and a further entity (206, 506, 564, 566, 568, 570, 572, 606.2, 664.1, 666.1, 668.2, 670.2, 672.2) by means of a peer-to-peer application (224, 424) by sending a message comprising instructions for generating the supply medium transaction agreement,
- generating at least one request message, comprising a supply medium quantity specification, a time period and/or at least one transaction criterion, and/or at least one acceptance message, comprising a supply medium quantity specification, a time period and/or at least one transaction criterion, based on a supply medium plan created for the entity (204, 304, 504, 604.1, 206, 506, 564, 566, 568, 570, 572, 606.2, 664.1, 666.1, 668.2, 670.2, 672.2) of the communication device (220.1, 220.2, 320), and
- causing a generation of a further supply medium transaction agreement about a supply medium quantity determined by a comparison between the supply medium quantity defined in the supply medium transaction agreement and the supply medium quantity, detected by a meter device (330), transmitted via a port (208, 308) of an entity (204, 304, 504, 604.1, 206, 506, 564, 566, 568, 570, 572, 606.2, 664.1, 666.1, 668.2, 670.2, 672.2) with the physical supply channel network (202, 302, 502, 602), upon detection of the deviation by the entity (204, 304, 504, 604.1, 206, 506, 564, 566, 568, 570, 572, 606.2, 664.1, 666.1, 668.2, 670.2, 672.2).

11. Peer-to-peer application (224, 424), wherein the peer-to-peer application (224, 424) is formed by software, comprising:
- means for receiving at least one message, comprising instructions for generating the supply medium transaction agreement from a communication device (220.1, 220.2, 320) of a first entity (204, 304, 504, 604) connectable to a physical supply channel network (202, 302, 502, 602.1), wherein the message from the first entity (204, 304, 504, 604.1) can cause the generation of a supply medium transaction agreement about the physical exchange of a supply medium between the first entity (204, 304, 504, 604.1) and a further entity (206, 506, 564, 566, 568, 570, 572, 606.2, 664.1, 666.1, 668.2, 670.2, 672.2), and
- means for generating the supply medium transaction agreement upon receiving the message,
- wherein, based on a supply medium plan created for at least one of the entities (204, 304, 504, 604.1, 206, 506, 564, 566, 568, 570, 572, 606.2, 664.1, 666.1, 668.2, 670.2, 672.2), at least one request message, comprising a supply medium quantity specification, a time period and/or at least one transaction criterion, and/or at least one acceptance message comprising a supply medium quantity specification, a time period and/or at least one transaction criterion, is received,
- wherein a generation of a further supply medium transaction agreement is carried out for a supply medium quantity determined by a comparison between the supply medium quantity defined in the supply medium transaction agreement and the supply medium quantity, detected by a meter device (330), transmitted via a port (208, 308) of an entity (204, 304, 504, 604. 1, 206, 506, 564, 566, 568, 570, 572, 606.2, 664.1, 666.1, 668.2, 670.2, 672.2) with the physical supply channel network (202, 302, 502, 602), upon the detection of the deviation by the entity (204, 304, 504, 604. 1, 206, 506, 564, 566, 568, 570, 572, 606.2, 664.1, 666.1, 668.2, 670.2, 672.2).

12. Method for operating a peer-to-peer application (224, 424), comprising:
- receiving at least one message, comprising instructions for generating the supply medium transaction agreement, from a communication device (220.1, 220.2, 320) of a first entity (204, 304, 504, 604.1) connectable to a physical supply channel network (202, 302, 502, 602), wherein, by the message transmitted by the first entity (204, 304, 504, 604.1) the generation of a supply medium transaction agreement about the physical exchange of a supply medium between the first entity (204, 304, 504, 604.1) and a further entity (206, 506, 564, 566, 568, 570, 572, 606.2, 664.1, 666.1, 668.2, 670.2, 672.2) can be caused, and
- generating the supply medium transaction agreement upon receiving the message,
- wherein, based on a supply medium plan created for at least one of the entities (204, 304, 504, 604.1, 206, 506, 564, 566, 568, 570, 572, 606.2, 664.1, 666.1, 668.2, 670.2, 672.2), at least one request message, comprising a supply medium quantity specification, a time period and/or at least one transaction criterion, and/or at least one acceptance message, comprising a supply medium quantity specification, a time period and/or at least one transaction criterion, is received,
- generating a further supply medium transaction agreement on a supply medium quantity determined by a comparison between the supply medium quantity defined in the supply medium transaction agreement and the supply medium quantity, detected by a meter device (330), transmitted via a port (208, 308) of an entity (204, 304, 504, 604.1, 206, 506, 564, 566, 568, 570, 572, 606.2, 664.1, 666.1, 668.2, 670.2, 672.2) with the physical supply channel network (202, 302, 502, 602), upon detection of the deviation by the entity (204, 304, 504, 604. 1, 206, 506, 564, 566, 568, 570, 572, 606.2, 664.1, 666.1, 668.2, 670.2, 672.2).

## Revendications

1. Système de distribution (200, 500, 600) comprenant :
- une première entité (204, 304, 504, 604.1) pouvant être raccordée à au moins un réseau physique de conduits de distribution (202, 302, 502, 602),
- au moins une autre entité (206, 506, 564, 566, 568, 570, 572, 606.2, 664.1, 666.1, 668.2, 670.2, 672.2) pouvant être raccordée au réseau physique de conduits de distribution (202, 302, 502, 602),
- au moins un réseau de pair à pair (222, 522, 622) configuré pour fournir une application de pair à pair (224, 424),
- où l'autre entité (206, 506, 564, 566, 568, 570, 572, 606.2, 664.1, 666.1, 668.2, 670.2, 672.2) comprend au moins un dispositif de communication (220.2) pouvant être raccordé au réseau de pair à pair (222, 522, 622),
- où la première entité (204, 304, 504, 604.1) comprend au moins un autre dispositif de communication (220.1, 320) pouvant être raccordé au réseau de pair à pair (222, 522, 622), et
- où au moins l'un des dispositifs de communication (220.1, 220.2, 320) est configuré pour mettre en œuvre au moins une génération d'un accord de transaction d'un produit de distribution, accord de transaction qui comprend une quantité d'un produit de distribution à échanger et qui porte sur l'échange physique d'un produit de distribution, ledit échange étant réalisé entre la première entité (204, 304, 504, 604.1) et l'autre entité (206, 506, 564, 566, 568, 570, 572, 606.2, 664.1, 666.1, 668.2, 670.2, 672.2) au moyen de l'application de pair à pair (224, 424), ladite génération de cet accord de transaction étant mise en œuvre par l'envoi d'un message comprenant une instruction destinée à générer l'accord de transaction du produit de distribution,
- où au moins l'un des dispositifs de communication (220.1, 220.2, 320) est configuré, en se basant sur un plan du produit de distribution, ledit plan étant élaboré pour l'entité (204, 304, 504, 604.1, 206, 506, 564, 566, 568, 570, 572, 606.2, 664.1, 666.1, 668.2, 670.2, 672.2) comprenant ce dispositif de communication, afin de générer au moins un message de demande, ledit message de demande comprenant une indication de quantité du produit de distribution, un laps de temps et/ou au moins un critère de transaction, et/ou afin de générer au moins un message d'acceptation, ledit message d'acceptation comprenant une indication de quantité du produit de distribution, un laps de temps et/ou au moins un critère de transaction, et
- au moins un compteur (330) configuré pour détecter la quantité de produit de distribution, qui a été transférée par le réseau physique de conduits de distribution (202, 302, 502, 602), via un raccordement (208, 308), à une entité (204, 304, 504, 604.1, 206, 506, 564, 566, 568, 570, 572, 606.2, 664.1, 666.1, 668.2, 670.2, 672.2), où une comparaison de la quantité de produit de distribution, qui a été détectée, est effectuée par rapport à la quantité de produit de distribution fixée dans l'accord de transaction du produit de distribution, et
- où le dispositif de communication (220.1, 220.2, 320), au moment d'une détection d'un écart par l'entité (204, 304, 504, 604.1, 206, 506, 564, 566, 568, 570, 572, 606.2, 664.1, 666.1, 668.2, 670.2, 672.2), est configuré pour mettre en œuvre une génération d'un autre accord de transaction du produit de distribution, cet autre accord de transaction portant sur l'écart constaté avec une autre entité.

2. Système (200, 500, 600) selon la revendication 1, **caractérisé**
- **en ce que** l'application de pair à pair (224, 424) est un registre décentralisé (224, 424), et
- **en ce que** le registre décentralisé (224, 424) peut être lu à au moins une partie des abonnés du réseau de pair à pair (222, 522, 622).

3. Système (200, 500, 600) selon la revendication 1 ou 2, **caractérisé en ce que** chaque ordinateur du réseau de pair à pair (222, 522, 622) présente l'application de pair à pair (224, 424).

4. Système (200, 500, 600) selon l'une quelconque des revendications précédentes, **caractérisé en ce que** l'application de pair à pair (224, 424) comprend des moyens de cryptage et/ou des moyens de signature et/ou des moyens de vérification, où au moins l'un des moyens de cryptage et/ou des moyens de signature et/ou des moyens de vérification est configuré pour stocker en mémoire au moins chaque accord de transaction du produit de distribution, qui a été généré.

5. Système (200, 500, 600) selon l'une quelconque des revendications précédentes, **caractérisé en ce que** l'application de pair à pair (224, 424) est une chaîne de blocs (224, 424) comprenant au moins deux blocs (446, 448, 450) liés l'un à l'autre.

6. Système (200, 500, 600) selon l'une quelconque des revendications précédentes,
**caractérisé**
- **en ce que** le dispositif de communication (220.1, 220.2, 320) est configuré pour transférer une quantité du produit de distribution, qui a été détectée, à l'application de pair à pair (224, 424).

7. Système (200, 500, 600) selon la revendication 6, **caractérisé en ce que** le dispositif de communication (220.1, 220.2, 320) est configuré pour mettre en œuvre une génération d'une transaction concernant un critère de transaction, en se basant sur au moins un critère de transaction fixé dans un accord de transaction du produit de distribution et en se basant sur la quantité du produit de distribution, qui a été détectée.

8. Procédé permettant de faire fonctionner un système de distribution (200, 500, 600), en particulier un système de distribution (200, 500, 600) selon l'une quelconque des revendications précédentes, où le système de distribution (200, 500, 600) comprend une première entité (204, 304, 504, 604.1) pouvant être raccordée à au moins un réseau physique de conduits de distribution (202, 302, 502, 602), comprend au moins une autre entité (206, 506, 564, 566, 568, 570, 572, 606.2, 664.1, 666.1, 668.2, 670.2, 672.2) pouvant être raccordée au réseau physique de conduits de distribution (202, 302, 502, 602), et comprend au moins un réseau de pair à pair (222, 522, 622) configuré pour fournir une application de pair à pair (224, 424), ledit procédé consistant :
- à mettre en œuvre une génération d'au moins un accord de transaction du produit de distribution, accord de transaction qui comprend une quantité du produit de distribution devant être échangée et qui porte sur l'échange physique d'un produit de distribution, ledit échange étant réalisé entre la première entité (204, 304, 504, 604.1) et l'autre entité (206, 506, 564, 566, 568, 570, 572, 606.2, 664.1, 666.1, 668.2, 670.2, 672.2) au moyen de l'application de pair à pair (224, 424), ladite génération de cet accord de transaction étant mise en œuvre par l'envoi d'un message comprenant une instruction destinée à la génération de l'accord de transaction du produit de distribution,
- où, en se basant sur un plan du produit de distribution, ledit plan étant élaboré pour au moins l'une des entités (204, 304, 504, 604.1, 206, 506, 564, 566, 568, 570, 572, 606.2, 664.1, 666.1, 668.2, 670.2, 672.2), au moins un message de demande est généré, ledit message de demande comprenant une indication de quantité du produit de distribution, un laps de temps et/ou au moins un critère de transaction, et/ou au moins un message d'acceptation est généré, ledit message d'acceptation comprenant une indication de quantité du produit de distribution, un laps de temps et/ou au moins un critère de transaction,
- à détecter la quantité du produit de distribution transférée par le réseau physique de conduits de distribution (202, 302, 502, 602), via un raccordement (208, 308), à une entité (204, 304, 504, 604.1, 206, 506, 564, 566, 568, 570, 572, 606.2, 664.1, 666.1, 668.2, 670.2, 672.2), où une comparaison de la quantité du produit de distribution, qui a été détectée, est effectuée par rapport à la quantité du produit de distribution fixée dans l'accord de transaction du produit de distribution, et
- à mettre en œuvre une génération d'un autre accord de transaction du produit de distribution, cet autre accord de transaction portant sur l'écart constaté avec une autre entité, au moment d'une détection d'un écart par l'entité (204, 304, 504, 604.1, 206, 506, 564, 566, 568, 570, 572, 606.2, 664.1, 666.1, 668.2, 670.2, 672.2).

9. Dispositif de communication (220.1, 220.2, 320) pour une première entité (204, 304, 504, 604.1) pouvant être raccordée à au moins un réseau physique de conduits de distribution (202, 302, 502, 602), ledit dispositif de communication comprenant :
- au moins un module de communication (342) configuré pour communiquer avec un réseau de pair à pair (222, 522, 622) fournissant une application de pair à pair (224, 424),
- où le module de communication (342) est configuré pour la mise en œuvre d'une génération d'un accord de transaction du produit de distribution, accord de transaction qui comprend une quantité du produit de distribution devant être échangée et qui porte sur l'échange physique d'un produit de distribution, ledit échange étant réalisé entre la première entité (204, 304, 504, 604.1) et une autre entité (206, 506, 564, 566, 568, 570, 572, 606.2, 664.1, 666.1, 668.2, 670.2, 672.2) au moyen de l'application de pair à pair (224, 424), ladite génération de cet accord de transaction étant mise en œuvre par l'envoi d'un message comprenant une instruction destinée à la génération de l'accord de transaction du produit de distribution,
- où le dispositif de communication (220.1, 220.2, 320) est configuré, en se basant sur un plan du produit de distribution, ledit plan étant élaboré pour l'entité (204, 304, 504, 604.1, 206, 506, 564, 566, 568, 570, 572, 606.2, 664.1, 666.1, 668.2, 670.2, 672.2) du dispositif de communication (220.1, 220.2, 320), afin de générer au moins un message de demande comprenant une indication de quantité du produit de distribution, un laps de temps et/ou au moins un critère de transaction, et/ou afin de générer au moins un message d'acceptation, ledit message d'acceptation comprenant une indication de quantité du produit de distribution, un laps de temps et/ou au moins un critère de transaction,
- où le dispositif de communication est configuré pour la mise en œuvre d'une génération d'un autre accord de transaction du produit de distribution, cet autre accord de transaction portant sur un écart déterminé par une comparaison faite entre la quantité du produit de distribution, qui a été fixée dans l'accord de transaction du produit de distribution, et la quantité du produit de distribution, qui a été détectée par un compteur (330) et transférée par le réseau physique de conduits de distribution (202, 302, 502, 602), via un raccordement (208, 308), à une entité (204, 304, 504, 604.1, 206, 506, 564, 566, 568, 570, 572, 606.2, 664.1, 666.1, 668.2, 670.2, 672.2), ladite génération de cet autre accord de transaction étant mise en œuvre au moment d'une détection de l'écart par l'entité (204, 304, 504, 604.1, 206, 506, 564, 566, 568, 570, 572, 606.2, 664.1, 666.1, 668.2, 670.2, 672.2).

10. Procédé permettant de faire fonctionner un dispositif de communication (220.1, 220.2, 320) pour une première entité (204, 304, 504, 604.1) pouvant être raccordée à au moins un réseau physique de conduits de distribution (202, 302, 502, 602), ledit procédé consistant :
- à mettre en œuvre une génération d'un accord de transaction du produit de distribution, ledit accord de transaction portant sur l'échange physique d'un produit de distribution, ledit échange étant réalisé entre la première entité (204, 304, 504, 604.1) et une autre entité (206, 506, 564, 566, 568, 570, 572, 606.2, 664.1, 666.1, 668.2, 670.2, 672.2) au moyen d'une application de pair à pair (224, 424), ladite génération de cet accord de transaction étant mise en œuvre par l'envoi d'un message comprenant une instruction destinée à la génération de l'accord de transaction du produit de distribution,
- à générer au moins un message de demande comprenant une indication de quantité du produit de distribution, un laps de temps et/ou au moins un critère de transaction, et/ou à générer au moins un message d'acceptation comprenant une indication de quantité du produit de distribution, un laps de temps et/ou au moins un critère de transaction, en se basant sur un plan du produit de distribution, ledit plan étant élaboré pour l'entité (204, 304, 504, 604.1, 206, 506, 564, 566, 568, 570, 572, 606.2, 664.1, 666.1, 668.2, 670.2, 672.2) du dispositif de communication (220.1, 220.2, 320), et
- à mettre en œuvre une génération d'un autre accord de transaction du produit de distribution, cet autre accord de transaction portant sur un écart déterminé par une comparaison faite entre la quantité du produit de distribution, qui a été fixée dans l'accord de transaction du produit de distribution, et la quantité du produit de distribution, qui a été détectée par un compteur (330) et transférée par le réseau physique de conduits de distribution (202, 302, 502, 602), via un raccordement (208, 308), à une entité (204, 304, 504, 604.1, 206, 506, 564, 566, 568, 570, 572, 606.2, 664.1, 666.1, 668.2, 670.2, 672.2), ladite génération de cet autre accord de transaction étant mise en œuvre au moment d'une détection de l'écart par l'entité (204, 304, 504, 604.1, 206, 506, 564, 566, 568, 570, 572, 606.2, 664.1, 666.1, 668.2, 670.2, 672.2).

11. Application de pair à pair (224, 424), où l'application de pair à pair (224, 424) est constituée par un logiciel, ladite application de pair à pair comprenant :
- des moyens servant à la réception d'au moins un message comprenant une instruction destinée à la génération de l'accord de transaction du produit de distribution, ledit message provenant d'un dispositif de communication (220.1, 220.2, 320) d'une première entité (204, 304, 504, 604.1) pouvant être raccordée à un réseau physique de conduits de distribution (202, 302, 502, 602), où la génération d'un accord de transaction du produit de distribution peut être mise en œuvre par le message provenant de la première entité (204, 304, 504, 604.1), ledit accord de transaction portant sur l'échange physique d'un produit de distribution, ledit échange étant réalisé entre la première entité (204, 304, 504, 604.1) et une autre entité (206, 506, 564, 566, 568, 570, 572, 606.2, 664.1, 666.1, 668.2, 670.2, 672.2), et
- des moyens servant à la génération de l'accord de transaction du produit de distribution, après réception du message,
- où, en se basant sur un plan du produit de distribution, ledit plan étant élaboré pour au moins l'une des entités (204, 304, 504, 604.1, 206, 506, 564, 566, 568, 570, 572, 606.2, 664.1, 666.1, 668.2, 670.2, 672.2), au moins un message de demande est reçu, ledit message de demande comprenant une indication de quantité du produit de distribution, un laps de temps et/ou au moins un critère de transaction, et/ou au moins un message d'acceptation est reçu, ledit message d'acceptation comprenant une indication de quantité du produit de distribution, un laps de temps et/ou au moins un critère de transaction,
- où il se produit une génération d'un autre accord de transaction du produit de distribution, cet autre accord de transaction portant sur un écart déterminé par une comparaison faite entre la quantité du produit de distribution, qui a été fixée dans l'accord de transaction du produit de distribution, et la quantité du produit de distribution, qui a été détectée par un compteur (330) et transférée par le réseau physique de conduits de distribution (202, 302, 502, 602), via un raccordement (208, 308), à une entité (204, 304, 504, 604.1, 206, 506, 564, 566, 568, 570, 572, 606.2, 664.1, 666.1, 668.2, 670.2, 672.2), ladite génération de cet autre accord de transaction se produisant au moment d'une détection de l'écart par l'entité (204, 304, 504, 604.1, 206, 506, 564, 566, 568, 570, 572, 606.2, 664.1, 666.1, 668.2, 670.2, 672.2).

12. Procédé permettant de faire fonctionner une application de pair à pair (224, 424), ledit procédé comprenant :
- la réception d'au moins un message comprenant une instruction destinée à la génération de l'accord de transaction du produit de distribution, ledit message provenant d'un dispositif de communication (220.1, 220.2, 320) d'une première entité (204, 304, 504, 604.1) pouvant être raccordée à un réseau physique de conduits de distribution (202, 302, 502, 602), où la génération d'un accord de transaction du produit de distribution peut être mise en œuvre par le message provenant de la première entité (204, 304, 504, 604.1), ledit accord de transaction portant sur l'échange physique d'un produit de distribution, ledit échange étant réalisé entre la première entité (204, 304, 504, 604.1) et une autre entité (206, 506, 564, 566, 568, 570, 572, 606.2, 664.1, 666.1, 668.2, 670.2, 672.2), et
- la génération de l'accord de transaction du produit de distribution, après réception du message,
- où, en se basant sur un plan du produit de distribution, ledit plan étant élaboré pour au moins l'une des entités (204, 304, 504, 604.1, 206, 506, 564, 566, 568, 570, 572, 606.2, 664.1, 666.1, 668.2, 670.2, 672.2), au moins un message de demande est reçu, ledit message de demande comprenant une indication de quantité du produit de distribution, un laps de temps et/ou au moins un critère de transaction, et/ou au moins un message d'acceptation est reçu, ledit message d'acceptation comprenant une indication de quantité du produit de distribution, un laps de temps et/ou au moins un critère de transaction,
- la génération d'un autre accord de transaction du produit de distribution, cet autre accord de transaction portant sur un écart déterminé par une comparaison faite entre la quantité du produit de distribution, qui a été fixée dans l'accord de transaction du produit de distribution, et la quantité du produit de distribution, qui a été détectée par un compteur (330) et transférée par le réseau physique de conduits de distribution (202, 302, 502, 602), via un raccordement (208, 308), à une entité (204, 304, 504, 604.1, 206, 506, 564, 566, 568, 570, 572, 606.2, 664.1, 666.1, 668.2, 670.2, 672.2), ladite génération de cet autre accord de transaction étant mise en œuvre au moment d'une détection de l'écart par l'entité (204, 304, 504, 604.1, 206, 506, 564, 566, 568, 570, 572, 606.2, 664.1, 666.1, 668.2, 670.2, 672.2).
